# EUROPEAN PATENT APPLICATION

(11) **EP 3 193 180 A1**
(43) Date of publication of application: **19.07.2017**
(21) Application number: 17158606.8
(22) Date of filing: 15.11.2011
(51) Int. Cl.: G01R 27/26, B41J 2/045, G01N 24/10, B01L 3/00, G01K 7/34

(54) **CAPACITANCE DETECTION IN A DROPLET ACTUATOR**

(30) Priority: 17.11.2010 US 414599 P; 25.06.2011 US 201161511175 P
(62) Divisional of application: 11841725.2
(71) Applicant: Advanced Liquid Logic, Inc., San Diego, CA 92122 (US)
(72) Inventor: POLLACK, Michael, Durham, NC 27707 (US); STURMER, Ryan, Durham, NC 27701 (US); PAIK, Philip, Chula Vista, CA 91913 (US); PAMULA, Vamsee, Durham, NC 27703 (US); SRINIVASAN, Vijay, Durham, NC 27703 (US)
(74) Representative: Cooper, John

(57) **Abstract**

A method is described for analyzing at least one condition present in a droplet actuator (1100). The droplet actuator comprises a bottom substrate (1110) separated from a top substrate (1112) by a gap (1114). The bottom substrate includes an arrangement of droplet operations electrodes (1116). Droplet operations are conducted on droplets (1124) located atop droplet operations electrodes (1116). The gap is filed with an oil filler fluid (1122) and an impedance sensing system (1200) is electrically connected to the droplet actuator (1100). The method comprises correlating impedance measurements obtained using the impedance sensing system with at least one condition present in the droplet actuator. The impedance sensing system may comprise an impedance spectrometer. The method may be used to determine a liquid temperature, e.g., droplet temperature, or the interfacial tension of the oil layer and/or droplets, or heat produced as a byproduct of chemical reactions.

## Description

### 1 Related Applications

This patent application is related to and claims priority to U.S. Provisional Patent Application Nos.: 61/414,599, entitle "Methods of Correlating Impedance Measurements to Conditions Present in a Droplet Actuator", filed November 17, 2011, and 61/511,175, entitled Capacitance Detection in a Droplet Actuator, filed July 25, 2011, the entire disclosures of which are incorporated herein by reference.

### 2 Field of the Invention

The invention relates to microfluidic devices for conducting droplet operations.

### 3 Background

A droplet actuator typically includes one or more substrates configured to form a surface or gap for conducting droplet operations. The one or more substrates establish a droplet operations surface or gap for conducting droplet operations and may also include electrodes arrange to conduct the droplet operations. The droplet operations substrate or the gap between the substrates may be coated or filled with a filler fluid that is immiscible with the liquid that forms the droplets. A droplet on the droplet actuator is separated from one or more of the electrodes by a dielectric layer. The droplet may be grounded. For a variety of reasons described more fully herein, it may be useful to measure the capacitance of the dielectric layer between the electrode(s) and the droplet.

### 4 Definitions

As used herein, the following terms have the meanings indicated.

"Activate," with reference to one or more electrodes, means affecting a change in the electrical state of the one or more electrodes which, in the presence of a droplet, results in a droplet operation. Activation of an electrode can be accomplished using alternating or direct current. Any suitable voltage may be used. For example, an electrode may be activated using a voltage which is greater than about 150 V, or greater than about 200 V, or greater than about 250 V, or from about 275 V to about 375 V, or about 300 V. Where alternating current is used, any suitable frequency may be employed. For example, an electrode may be activated using alternating current having a frequency from about 1 Hz to about 100 Hz, or from about 10 Hz to about 60 Hz, or from about 20 Hz to about 40 Hz, or about 30 Hz.

"Bead," with respect to beads on a droplet actuator, means any bead or particle that is capable of interacting with a droplet on or in proximity with a droplet actuator. Beads may be any of a wide variety of shapes, such as spherical, generally spherical, egg shaped, disc shaped, cubical, amorphous and other three dimensional shapes. The bead may, for example, be capable of being subjected to a droplet operation in a droplet on a droplet actuator or otherwise configured with respect to a droplet actuator in a manner which permits a droplet on the droplet actuator to be brought into contact with the bead on the droplet actuator and/or off the droplet actuator. Beads may be provided in a droplet, in a droplet operations gap, or on a droplet operations surface. Beads may be provided in a reservoir that is external to a droplet operations gap or situated apart from a droplet operations surface, and the reservoir may be associated with a fluid path that permits a droplet including the beads to be brought into a droplet operations gap or into contact with a droplet operations surface. Beads may be manufactured using a wide variety of materials, including for example, resins, and polymers. The beads may be any suitable size, including for example, microbeads, microparticles, nanobeads and nanoparticles. In some cases, beads are magnetically responsive; in other cases beads are not significantly magnetically responsive. For magnetically responsive beads, the magnetically responsive material may constitute substantially all of a bead, a portion of a bead, or only one component of a bead. The remainder of the bead may include, among other things, polymeric material, coatings, and moieties which permit attachment of an assay reagent. Examples of suitable beads include flow cytometry microbeads, polystyrene microparticles and nanoparticles, functionalized polystyrene microparticles and nanoparticles, coated polystyrene microparticles and nanoparticles, silica microbeads, fluorescent microspheres and nanospheres, functionalized fluorescent microspheres and nanospheres, coated fluorescent microspheres and nanospheres, color dyed microparticles and nanoparticles, magnetic microparticles and nanoparticles, superparamagnetic microparticles and nanoparticles (e.g., DYNABEADS® particles, available from Invitrogen Group, Carlsbad, CA), fluorescent microparticles and nanoparticles, coated magnetic microparticles and nanoparticles, ferromagnetic microparticles and nanoparticles, coated ferromagnetic microparticles and nanoparticles, and those described in U.S. Patent Publication Nos. 20050260686, entitled "Multiplex flow assays preferably with magnetic particles as solid phase," published on November 24, 2005; 20030132538, entitled "Encapsulation of discrete quanta of fluorescent particles," published on July 17, 2003; 20050118574, entitled "Multiplexed Analysis of Clinical Specimens Apparatus and Method," published on June 2, 2005; 20050277197. Entitled "Microparticles with Multiple Fluorescent Signals and Methods of Using Same," published on December 15, 2005; 20060159962, entitled "Magnetic Microspheres for use in Fluorescence-based Applications," published on July 20, 2006; the entire disclosures of which are incorporated herein by reference for their teaching concerning beads and magnetically responsive materials and beads. Beads may be pre-coupled with a biomolecule or other substance that is able to bind to and form a complex with a biomolecule. Beads may be pre-coupled with an antibody, protein or antigen, DNA/RNA probe or any other molecule with an affinity for a desired target. Examples of droplet actuator techniques for immobilizing magnetically responsive beads and/or non-magnetically responsive beads and/or conducting droplet operations protocols using beads are described in U.S. Patent Application No. 11/639,566, entitled "Droplet-Based Particle Sorting," filed on December 15, 2006; U.S. Patent Application No. 61/039,183, entitled "Multiplexing Bead Detection in a Single Droplet," filed on March 25, 2008; U.S. Patent Application No. 61/047,789, entitled "Droplet Actuator Devices and Droplet Operations Using Beads," filed on April 25, 2008; U.S. Patent Application No. 61/086,183, entitled "Droplet Actuator Devices and Methods for Manipulating Beads," filed on August 5, 2008; International Patent Application No. PCT/US2008/053545, entitled "Droplet Actuator Devices and Methods Employing Magnetic Beads," filed on February 11, 2008; International Patent Application No. PCT/US2008/058018, entitled "Bead-based Multiplexed Analytical Methods and Instrumentation," filed on March 24, 2008; International Patent Application No. PCT/US2008/058047, "Bead Sorting on a Droplet Actuator," filed on March 23, 2008; and International Patent Application No. PCT/US2006/047486, entitled "Droplet-based Biochemistry," filed on December 11, 2006; the entire disclosures of which are incorporated herein by reference. Bead characteristics may be employed in the multiplexing aspects of the invention. Examples of beads having characteristics suitable for multiplexing, as well as methods of detecting and analyzing signals emitted from such beads, may be found in U.S. Patent Publication No. 20080305481, entitled "Systems and Methods for Multiplex Analysis of PCR in Real Time," published on December 11, 2008; U.S. Patent Publication No. 20080151240, "Methods and Systems for Dynamic Range Expansion," published on June 26, 2008; U.S. Patent Publication No. 20070207513, entitled "Methods, Products, and Kits for Identifying an Analyte in a Sample," published on September 6, 2007; U.S. Patent Publication No. 20070064990, entitled "Methods and Systems for Image Data Processing," published on March 22, 2007; U.S. Patent Publication No. 20060159962, entitled "Magnetic Microspheres for use in Fluorescence-based Applications," published on July 20, 2006; U.S. Patent Publication No. 20050277197, entitled "Microparticles with Multiple Fluorescent Signals and Methods of Using Same," published on December 15, 2005; and U.S. Patent Publication No. 20050118574, entitled "Multiplexed Analysis of Clinical Specimens Apparatus and Method," published on June 2, 2005.

"Droplet" means a volume of liquid on a droplet actuator. Typically, a droplet is at least partially bounded by a filler fluid. For example, a droplet may be completely surrounded by a filler fluid or may be bounded by filler fluid and one or more surfaces of the droplet actuator. As another example, a droplet may be bounded by filler fluid, one or more surfaces of the droplet actuator, and/or the atmosphere. As yet another example, a droplet may be bounded by filler fluid and the atmosphere. Droplets may, for example, be aqueous or non-aqueous or may be mixtures or emulsions including aqueous and non-aqueous components. Droplets may take a wide variety of shapes; nonlimiting examples include generally disc shaped, slug shaped, truncated sphere, ellipsoid, spherical, partially compressed sphere, hemispherical, ovoid, cylindrical, combinations of such shapes, and various shapes formed during droplet operations, such as merging or splitting or formed as a result of contact of such shapes with one or more surfaces of a droplet actuator. For examples of droplet fluids that may be subjected to droplet operations using the approach of the invention, see International Patent Application No. PCT/US 06/47486, entitled, "Droplet-Based Biochemistry," filed on December 11, 2006. In various embodiments, a droplet may include a biological sample, such as whole blood, lymphatic fluid, serum, plasma, sweat, tear, saliva, sputum, cerebrospinal fluid, amniotic fluid, seminal fluid, vaginal excretion, serous fluid, synovial fluid, pericardial fluid, peritoneal fluid, pleural fluid, transudates, exudates, cystic fluid, bile, urine, gastric fluid, intestinal fluid, fecal samples, liquids containing single or multiple cells, liquids containing organelles, fluidized tissues, fluidized organisms, liquids containing multi-celled organisms, biological swabs and biological washes. Moreover, a droplet may include a reagent, such as water, deionized water, saline solutions, acidic solutions, basic solutions, detergent solutions and/or buffers. Other examples of droplet contents include reagents, such as a reagent for a biochemical protocol, such as a nucleic acid amplification protocol, an affinity-based assay protocol, an enzymatic assay protocol, a sequencing protocol, and/or a protocol for analyses of biological fluids.

"Droplet Actuator" means a device for manipulating droplets. For examples of droplet actuators, see Pamula et al., U.S. Patent 6,911,132, entitled "Apparatus for Manipulating Droplets by Electrowetting-Based Techniques," issued on June 28, 2005; Pamula et al., U.S. Patent Application No. 11/343,284, entitled "Apparatuses and Methods for Manipulating Droplets on a Printed Circuit Board," filed on filed on January 30, 2006; Pollack et al., International Patent Application No. PCT/US2006/047486, entitled "Droplet-Based Biochemistry," filed on December 11, 2006; Shenderov, U.S. Patents 6,773,566, entitled "Electrostatic Actuators for Microfluidics and Methods for Using Same," issued on August 10, 2004 and 6,565,727, entitled "Actuators for Microfluidics Without Moving Parts," issued on January 24, 2000; Kim and/or Shah et al., U.S. Patent Application Nos. 10/343,261, entitled "Electrowetting-driven Micropumping," filed on January 27, 2003, 11/275,668, entitled "Method and Apparatus for Promoting the Complete Transfer of Liquid Drops from a Nozzle," filed on January 23, 2006, 11/460,188, entitled "Small Object Moving on Printed Circuit Board," filed on January 23, 2006, 12/465,935, entitled "Method for Using Magnetic Particles in Droplet Microfluidics," filed on May 14, 2009, and 12/513,157, entitled "Method and Apparatus for Real-time Feedback Control of Electrical Manipulation of Droplets on Chip," filed on April 30, 2009; Velev, U.S. Patent 7,547,380, entitled "Droplet Transportation Devices and Methods Having a Fluid Surface," issued on June 16, 2009; Sterling et al., U.S. Patent 7,163,612, entitled "Method, Apparatus and Article for Microfluidic Control via Electrowetting, for Chemical, Biochemical and Biological Assays and the Like," issued on January 16, 2007; Becker and Gascoyne et al., U.S. Patent Nos. 7,641,779, entitled "Method and Apparatus for Programmable fluidic Processing," issued on January 5, 2010, and 6,977,033, entitled "Method and Apparatus for Programmable fluidic Processing," issued on December 20, 2005; Decre et al., U.S. Patent 7,328,979, entitled "System for Manipulation of a Body of Fluid," issued on February 12, 2008; Yamakawa et al., U.S. Patent Pub. No. 20060039823, entitled "Chemical Analysis Apparatus," published on February 23, 2006; Wu, International Patent Pub. No. WO/2009/003184, entitled "Digital Microfluidics Based Apparatus for Heat-exchanging Chemical Processes," published on December 31, 2008; Fouillet et al., U.S. Patent Pub. No. 20090192044, entitled "Electrode Addressing Method," published on July 30, 2009; Fouillet et al., U.S. Patent 7,052,244, entitled "Device for Displacement of Small Liquid Volumes Along a Micro-catenary Line by Electrostatic Forces," issued on May 30, 2006; Marchand et al., U.S. Patent Pub. No. 20080124252, entitled "Droplet Microreactor," published on May 29, 2008; Adachi et al., U.S. Patent Pub. No. 20090321262, entitled "Liquid Transfer Device," published on December 31, 2009; Roux et al., U.S. Patent Pub. No. 20050179746, entitled "Device for Controlling the Displacement of a Drop Between two or Several Solid Substrates," published on August 18, 2005; Dhindsa et al., "Virtual Electrowetting Channels: Electronic Liquid Transport with Continuous Channel Functionality," Lab Chip, 10:832-836 (2010); the entire disclosures of which are incorporated herein by reference, along with their priority documents. Certain droplet actuators will include one or more substrates arranged with a gap therebetween and electrodes associated with (e.g., layered on, attached to, and/or embedded in) the one or more substrates and arranged to conduct one or more droplet operations. For example, certain droplet actuators will include a base (or bottom) substrate, droplet operations electrodes associated with the substrate, one or more dielectric layers atop the substrate and/or electrodes, and optionally one or more hydrophobic layers atop the substrate, dielectric layers and/or the electrodes forming a droplet operations surface. A top substrate may also be provided, which is separated from the droplet operations surface by a gap, commonly referred to as a droplet operations gap. Various electrode arrangements on the top and/or bottom substrates are discussed in the above-referenced patents and applications and certain novel electrode arrangements are discussed in the description of the invention. During droplet operations it is preferred that droplets remain in continuous contact or frequent contact with a ground or reference electrode. A ground or reference electrode may be associated with the top substrate facing the gap, the bottom substrate facing the gap, in the gap. Where electrodes are provided on both substrates, electrical contacts for coupling the electrodes to a droplet actuator instrument for controlling or monitoring the electrodes may be associated with one or both plates. In some cases, electrodes on one substrate are electrically coupled to the other substrate so that only one substrate is in contact with the droplet actuator. In one embodiment, a conductive material (e.g., an epoxy, such as MASTER BOND™ Polymer System EP79, available from Master Bond, Inc., Hackensack, NJ) provides the electrical connection between electrodes on one substrate and electrical paths on the other substrates, e.g., a ground electrode on a top substrate may be coupled to an electrical path on a bottom substrate by such a conductive material. Where multiple substrates are used, a spacer may be provided between the substrates to determine the height of the gap therebetween and define dispensing reservoirs. The spacer height may, for example, be from about 5 µm to about 600 µm, or about 100 µm to about 400 µm, or about 200 µm to about 350 µm, or about 250 µm to about 300 µm, or about 275 µm. The spacer may, for example, be formed of a layer of projections form the top or bottom substrates, and/or a material inserted between the top and bottom substrates. One or more openings may be provided in the one or more substrates for forming a fluid path through which liquid may be delivered into the droplet operations gap. The one or more openings may in some cases be aligned for interaction with one or more electrodes, e.g., aligned such that liquid flowed through the opening will come into sufficient proximity with one or more droplet operations electrodes to permit a droplet operation to be effected by the droplet operations electrodes using the liquid. The base (or bottom) and top substrates may in some cases be formed as one integral component. One or more reference electrodes may be provided on the base (or bottom) and/or top substrates and/or in the gap. Examples of reference electrode arrangements are provided in the above referenced patents and patent applications. In various embodiments, the manipulation of droplets by a droplet actuator may be electrode mediated, e.g., electrowetting mediated or dielectrophoresis mediated or Coulombic force mediated. Examples of other techniques for controlling droplet operations that may be used in the droplet actuators of the invention include using devices that induce hydrodynamic fluidic pressure, such as those that operate on the basis of mechanical principles (e.g. external syringe pumps, pneumatic membrane pumps, vibrating membrane pumps, vacuum devices, centrifugal forces, piezoelectric/ultrasonic pumps and acoustic forces); electrical or magnetic principles (e.g. electroosmotic flow, electrokinetic pumps, ferrofluidic plugs, electrohydrodynamic pumps, attraction or repulsion using magnetic forces and magnetohydrodynamic pumps); thermodynamic principles (e.g. gas bubble generation/phase-change-induced volume expansion); other kinds of surface-wetting principles (e.g. electrowetting, and optoelectrowetting, as well as chemically, thermally, structurally and radioactively induced surface-tension gradients); gravity; surface tension (e.g., capillary action); electrostatic forces (e.g., electroosmotic flow); centrifugal flow (substrate disposed on a compact disc and rotated); magnetic forces (e.g., oscillating ions causes flow); magnetohydrodynamic forces; and vacuum or pressure differential. In certain embodiments, combinations of two or more of the foregoing techniques may be employed to conduct a droplet operation in a droplet actuator of the invention. Similarly, one or more of the foregoing may be used to deliver liquid into a droplet operations gap, e.g., from a reservoir in another device or from an external reservoir of the droplet actuator (e.g., a reservoir associated with a droplet actuator substrate and a fluid path from the reservoir into the droplet operations gap). Droplet operations surfaces of certain droplet actuators of the invention may be made from hydrophobic materials or may be coated or treated to make them hydrophobic. For example, in some cases some portion or all of the droplet operations surfaces may be derivatized with low surface-energy materials or chemistries, e.g., by deposition or using in situ synthesis using compounds such as poly- or per-fluorinated compounds in solution or polymerizable monomers. Examples include TEFLON® AF (available from DuPont, Wilmington, DE), members of the cytop family of materials, coatings in the FLUOROPEL® family of hydrophobic and superhydrophobic coatings (available from Cytonix Corporation, Beltsville, MD), silane coatings, fluorosilane coatings, hydrophobic phosphonate derivatives (e.g.., those sold by Aculon, Inc), and NOVEC™ electronic coatings (available from 3M Company, St. Paul, MN), and other fluorinated monomers for plasma-enhanced chemical vapor deposition (PECVD). In some cases, the droplet operations surface may include a hydrophobic coating having a thickness ranging from about 10 nm to about 1,000 nm. Moreover, in some embodiments, the top substrate of the droplet actuator includes an electrically conducting organic polymer, which is then coated with a hydrophobic coating or otherwise treated to make the droplet operations surface hydrophobic. For example, the electrically conducting organic polymer that is deposited onto a plastic substrate may be poly(3,4-ethylenedioxythiophene) poly(styrenesulfonate) (PEDOT:PSS). Other examples of electrically conducting organic polymers and alternative conductive layers are described in Pollack et al., International Patent Application No. PCT/US2010/040705, entitled "Droplet Actuator Devices and Methods," the entire disclosure of which is incorporated herein by reference. One or both substrates may be fabricated using a printed circuit board (PCB), glass, indium tin oxide (ITO)-coated glass, and/or semiconductor materials as the substrate. When the substrate is ITO-coated glass, the ITO coating is preferably a thickness in the range of about 20 to about 200 nm, preferably about 50 to about 150 nm, or about 75 to about 125 nm, or about 100 nm. In some cases, the top and/or bottom substrate includes a PCB substrate that is coated with a dielectric, such as a polyimide dielectric, which may in some cases also be coated or otherwise treated to make the droplet operations surface hydrophobic. When the substrate includes a PCB, the following materials are examples of suitable materials: MITSUI™ BN-300 (available from MITSUI Chemicals America, Inc., San Jose CA); ARLON™ 11N (available from Arlon, Inc, Santa Ana, CA).; NELCO® N4000-6 and N5000-30/32 (available from Park Electrochemical Corp., Melville, NY); ISOLA™ FR406 (available from Isola Group, Chandler, AZ), especially IS620; fluoropolymer family (suitable for fluorescence detection since it has low background fluorescence); polyimide family; polyester; polyethylene naphthalate; polycarbonate; polyetheretherketone; liquid crystal polymer; cyclo-olefin copolymer (COC); cyclo-olefin polymer (COP); aramid; THERMOUNT® nonwoven aramid reinforcement (available from DuPont, Wilmington, DE); NOMEX® brand fiber (available from DuPont, Wilmington, DE); and paper. Various materials are also suitable for use as the dielectric component of the substrate. Examples include: vapor deposited dielectric, such as PARYLENE™ C (especially on glass) and PARYLENE™ N (available from Parylene Coating Services, Inc., Katy, TX); TEFLON® AF coatings; cytop; soldermasks, such as liquid photoimageable soldermasks (e.g., on PCB) like TAIYO™ PSR4000 series, TAIYO™ PSR and AUS series (available from Taiyo America, Inc. Carson City, NV) (good thermal characteristics for applications involving thermal control), and PROBIMER™ 8165 (good thermal characteristics for applications involving thermal control (available from Huntsman Advanced Materials Americas Inc., Los Angeles, CA); dry film soldermask, such as those in the VACREL® dry film soldermask line (available from DuPont, Wilmington, DE); film dielectrics, such as polyimide film (e.g., KAPTON® polyimide film, available from DuPont, Wilmington, DE), polyethylene, and fluoropolymers (e.g., FEP), polytetrafluoroethylene; polyester; polyethylene naphthalate; cyclo-olefin copolymer (COC); cyclo-olefin polymer (COP); any other PCB substrate material listed above; black matrix resin; and polypropylene. Droplet transport voltage and frequency may be selected for performance with reagents used in specific assay protocols. Design parameters may be varied, e.g., number and placement of on-chip reservoirs, number of independent electrode connections, size (volume) of different reservoirs, placement of magnets/bead washing zones, electrode size, inter-electrode pitch, and gap height (between top and bottom substrates) may be varied for use with specific reagents, protocols, droplet volumes, etc. In some cases, a substrate of the invention may derivatized with low surface-energy materials or chemistries, e.g., using deposition or in situ synthesis using poly- or per-fluorinated compounds in solution or polymerizable monomers. Examples include TEFLON® AF coatings and FLUOROPEL® coatings for dip or spray coating, and other fluorinated monomers for plasma-enhanced chemical vapor deposition (PECVD). Additionally, in some cases, some portion or all of the droplet operations surface may be coated with a substance for reducing background noise, such as background fluorescence from a PCB substrate. For example, the noise-reducing coating may include a black matrix resin, such as the black matrix resins available from Toray industries, Inc., Japan. Electrodes of a droplet actuator are typically controlled by a controller or a processor, which is itself provided as part of a system, which may include processing functions as well as data and software storage and input and output capabilities. The techniques described herein are also useful for operation in channel based microfluidics devices, in addition to the droplet actuators described herein and other droplet actuators known in the art.

"Droplet operation" means any manipulation of a droplet on a droplet actuator. A droplet operation may, for example, include: loading a droplet into the droplet actuator; dispensing one or more droplets from a source droplet; splitting, separating or dividing a droplet into two or more droplets; transporting a droplet from one location to another in any direction; merging or combining two or more droplets into a single droplet; diluting a droplet; mixing a droplet; agitating a droplet; deforming a droplet; retaining a droplet in position; incubating a droplet; heating a droplet; vaporizing a droplet; cooling a droplet; disposing of a droplet; transporting a droplet out of a droplet actuator; other droplet operations described herein; and/or any combination of the foregoing. The terms "merge," "merging," "combine," "combining" and the like are used to describe the creation of one droplet from two or more droplets. It should be understood that when such a term is used in reference to two or more droplets, any combination of droplet operations that are sufficient to result in the combination of the two or more droplets into one droplet may be used. For example, "merging droplet A with droplet B," can be achieved by transporting droplet A into contact with a stationary droplet B, transporting droplet B into contact with a stationary droplet A, or transporting droplets A and B into contact with each other. The terms "splitting," "separating" and "dividing" are not intended to imply any particular outcome with respect to volume of the resulting droplets (i.e., the volume of the resulting droplets can be the same or different) or number of resulting droplets (the number of resulting droplets may be 2, 3, 4, 5 or more). The term "mixing" refers to droplet operations which result in more homogenous distribution of one or more components within a droplet. Examples of "loading" droplet operations include microdialysis loading, pressure assisted loading, robotic loading, passive loading, and pipette loading. Droplet operations may be electrode-mediated. In some cases, droplet operations are further facilitated by the use of hydrophilic and/or hydrophobic regions on surfaces and/or by physical obstacles. For examples of droplet operations, see the patents and patent applications cited above under the definition of "droplet actuator." Impedance or capacitance sensing or imaging techniques may sometimes be used to determine or confirm the outcome of a droplet operation. Examples of such techniques are described in Sturmer et al., International Patent Pub. No. WO/2008/101194, entitled "Capacitance Detection in a Droplet Actuator," published on August 21, 2008, the entire disclosure of which is incorporated herein by reference. Generally speaking, the sensing or imaging techniques may be used to confirm the presence or absence of a droplet at a specific electrode. For example, the presence of a dispensed droplet at the destination electrode following a droplet dispensing operation confirms that the droplet dispensing operation was effective. Similarly, the presence of a droplet at a detection spot at an appropriate step in an assay protocol may confirm that a previous set of droplet operations has successfully produced a droplet for detection. Droplet transport time can be quite fast. For example, in various embodiments, transport of a droplet from one electrode to the next may exceed about 1 sec, or about 0.1 sec, or about 0.01 sec, or about 0.001 sec. In one embodiment, the electrode is operated in AC mode but is switched to DC mode for imaging. It is helpful for conducting droplet operations for the footprint area of droplet to be similar to electrowetting area; in other words, 1x-, 2x- 3x-droplets are usefully controlled operated using 1, 2, and 3 electrodes, respectively. If the droplet footprint is greater than the number of electrodes available for conducting a droplet operation at a given time, the difference between the droplet size and the number of electrodes should typically not be greater than 1; in other words, a 2x droplet is usefully controlled using 1 electrode and a 3x droplet is usefully controlled using 2 electrodes. When droplets include beads, it is useful for droplet size to be equal to the number of electrodes controlling the droplet, e.g., transporting the droplet.

"Filler fluid" means a fluid associated with a droplet operations substrate of a droplet actuator, which fluid is sufficiently immiscible with a droplet phase to render the droplet phase subject to electrode-mediated droplet operations. For example, the gap of a droplet actuator is typically filled with a filler fluid. The filler fluid may, for example, be a low-viscosity oil, such as silicone oil or hexadecane filler fluid. The filler fluid may fill the entire gap of the droplet actuator or may coat one or more surfaces of the droplet actuator. Filler fluids may be conductive or nonconductive. Filler fluids may, for example, be doped with surfactants or other additives. For example, additives may be selected to improve droplet operations and/or reduce loss of reagent or target substances from droplets, formation of microdroplets, cross contamination between droplets, contamination of droplet actuator surfaces, degradation of droplet actuator materials, etc. Composition of the filler fluid, including surfactant doping, may be selected for performance with reagents used in the specific assay protocols and effective interaction or non-interaction with droplet actuator materials. Examples of filler fluids and filler fluid formulations suitable for use with the invention are provided in Srinivasan et al, International Patent Pub. Nos. WO/2010/027894, entitled "Droplet Actuators, Modified Fluids and Methods," published on March 11, 2010, and WO/2009/021173, entitled "Use of Additives for Enhancing Droplet Operations," published on February 12, 2009; Sista et al., International Patent Pub. No. WO/2008/098236, entitled "Droplet Actuator Devices and Methods Employing Magnetic Beads," published on August 14, 2008; and Monroe et al., U.S. Patent Publication No. 20080283414, entitled "Electrowetting Devices," filed on May 17, 2007; the entire disclosures of which are incorporated herein by reference, as well as the other patents and patent applications cited herein.

"Immobilize" with respect to magnetically responsive beads, means that the beads are substantially restrained in position in a droplet or in filler fluid on a droplet actuator. For example, in one embodiment, immobilized beads are sufficiently restrained in position in a droplet to permit execution of a droplet splitting operation, yielding one droplet with substantially all of the beads and one droplet substantially lacking in the beads.

"Magnetically responsive" means responsive to a magnetic field. "Magnetically responsive beads" include or are composed of magnetically responsive materials. Examples of magnetically responsive materials include paramagnetic materials, ferromagnetic materials, ferrimagnetic materials, and metamagnetic materials. Examples of suitable paramagnetic materials include iron, nickel, and cobalt, as well as metal oxides, such as Fe₃O₄, BaFe₁₂O₁₉, CoO, NiO, Mn₂O₃, Cr₂O₃, and CoMnP.

"Transporting into the magnetic field of a magnet," "transporting towards a magnet," and the like, as used herein to refer to droplets and/or magnetically responsive beads within droplets, is intended to refer to transporting into a region of a magnetic field capable of substantially attracting magnetically responsive beads in the droplet. Similarly, "transporting away from a magnet or magnetic field," "transporting out of the magnetic field of a magnet," and the like, as used herein to refer to droplets and/or magnetically responsive beads within droplets, is intended to refer to transporting away from a region of a magnetic field capable of substantially attracting magnetically responsive beads in the droplet, whether or not the droplet or magnetically responsive beads is completely removed from the magnetic field. It will be appreciated that in any of such cases described herein, the droplet may be transported towards or away from the desired region of the magnetic field, and/or the desired region of the magnetic field may be moved towards or away from the droplet. Reference to an electrode, a droplet, or magnetically responsive beads being "within" or "in" a magnetic field, or the like, is intended to describe a situation in which the electrode is situated in a manner which permits the electrode to transport a droplet into and/or away from a desired region of a magnetic field, or the droplet or magnetically responsive beads is/are situated in a desired region of the magnetic field, in each case where the magnetic field in the desired region is capable of substantially attracting any magnetically responsive beads in the droplet. Similarly, reference to an electrode, a droplet, or magnetically responsive beads being "outside of" or "away from" a magnetic field, and the like, is intended to describe a situation in which the electrode is situated in a manner which permits the electrode to transport a droplet away from a certain region of a magnetic field, or the droplet or magnetically responsive beads is/are situated away from a certain region of the magnetic field, in each case where the magnetic field in such region is not capable of substantially attracting any magnetically responsive beads in the droplet or in which any remaining attraction does not eliminate the effectiveness of droplet operations conducted in the region. In various aspects of the invention, a system, a droplet actuator, or another component of a system may include a magnet, such as one or more permanent magnets (e.g., a single cylindrical or bar magnet or an array of such magnets, such as a Halbach array) or an electromagnet or array of electromagnets, to form a magnetic field for interacting with magnetically responsive beads or other components on chip. Such interactions may, for example, include substantially immobilizing or restraining movement or flow of magnetically responsive beads during storage or in a droplet during a droplet operation or pulling magnetically responsive beads out of a droplet.

"Washing" with respect to washing a bead means reducing the amount and/or concentration of one or more substances in contact with the bead or exposed to the bead from a droplet in contact with the bead. The reduction in the amount and/or concentration of the substance may be partial, substantially complete, or even complete. The substance may be any of a wide variety of substances; examples include target substances for further analysis, and unwanted substances, such as components of a sample, contaminants, and/or excess reagent. In some embodiments, a washing operation begins with a starting droplet in contact with a magnetically responsive bead, where the droplet includes an initial amount and initial concentration of a substance. The washing operation may proceed using a variety of droplet operations. The washing operation may yield a droplet including the magnetically responsive bead, where the droplet has a total amount and/or concentration of the substance which is less than the initial amount and/or concentration of the substance. Examples of suitable washing techniques are described in Pamula et al., U.S. Patent 7,439,014, entitled "Droplet-Based Surface Modification and Washing," granted on October 21, 2008, the entire disclosure of which is incorporated herein by reference.

The terms "top," "bottom," "over," "under," and "on" are used throughout the description with reference to the relative positions of components of the droplet actuator, such as relative positions of top and bottom substrates of the droplet actuator. It will be appreciated that the droplet actuator is functional regardless of its orientation in space.

When a liquid in any form (e.g., a droplet or a continuous body, whether moving or stationary) is described as being "on", "at", or "over" an electrode, array, matrix or surface, such liquid could be either in direct contact with the electrode/array/matrix/surface, or could be in contact with one or more layers or films that are interposed between the liquid and the electrode/array/matrix/surface.

When a droplet is described as being "on" or "loaded on" a droplet actuator, it should be understood that the droplet is arranged on the droplet actuator in a manner which facilitates using the droplet actuator to conduct one or more droplet operations on the droplet, the droplet is arranged on the droplet actuator in a manner which facilitates sensing of a property of or a signal from the droplet, and/or the droplet has been subjected to a droplet operation on the droplet actuator.

### 5 Brief Description of the Drawings

Figures 1A and 1B illustrate a top view and side view, respectively, of a droplet actuator;
Figure 2 illustrates a nonlimiting example of a capacitance detection circuit for determining capacitance *C-droplet*;
Figure 3 illustrates another nonlimiting example of a capacitance detection circuit for determining the capacitance of a droplet within a droplet actuator;
Figure 4 illustrates yet another nonlimiting example of a capacitance detection circuit for determining the capacitance of a droplet within a droplet actuator;
Figures 5A, 5B, 5C, and 5D illustrate a nonlimiting example of using capacitance detection in a droplet actuator;
Figures 6A and 6B illustrate another nonlimiting example of using capacitance detection in a droplet actuator;
Figure 7 illustrates yet another nonlimiting example of using capacitance detection in a droplet actuator;
Figure 8 illustrates a schematic diagram of an embodiment of a droplet actuation circuit of the invention;
Figure 9 illustrates a schematic diagram of an embodiment of a droplet actuation circuit that includes a capacitance detection circuit; and
Figure 10A illustrates a schematic diagram of an embodiment of a capacitance detection circuit of the invention that may be used in a droplet actuator for the purpose of performing droplet detection.
Figure 10B illustrates an input voltage curve and an output voltage curve of a charge integrating amplifier that is suitable for use in the capacitance detection circuit of the invention; and
Figure 11 illustrates a side view of a portion of an example of droplet actuator, showing an oil film between the droplet and the surfaces of the droplet actuator;
Figure 12 illustrates a side view of the droplet actuator of Figure 11 and a schematic diagram showing an impedance sensing system with respect to the droplet and oil film;
Figure 13 illustrates a schematic diagram of an example of a system for controlling droplet operations and/or impedance sensing operations of a droplet actuator;
Figure 14 illustrates a schematic diagram of the system of Figure 13 that is configured for conducting droplet operations,
Figure 15 illustrates a schematic diagram of the system of Figure 13 that is configured for conducting impedance sensing operations,
Figure 16 illustrates a top view of a portion of the droplet actuator of Figure 11, which includes at least one embedded impedance electrode that is electrically connected to the impedance sensing system;
Figure 17 illustrates another top view of a portion of the droplet actuator of Figure 11, which includes multiple embedded impedance electrodes that are electrically connected to the impedance sensing system;
Figure 18 illustrates a schematic diagram of the system of Figure 13 that further includes at least one embedded impedance electrode and that is configured for conducting impedance sensing operations;
Figure 19 illustrates yet another top view of the droplet actuator of Figure 11, which includes the electrode arrangement includes at least one set of coplanar embedded impedance electrodes that are electrically connected to an impedance sensing system; and
Figure 20 illustrates a schematic diagram of the system of Figure 13 that further includes at least one set of coplanar embedded impedance electrodes and that that is configured for conducting impedance sensing operations.

### 6 Description

The invention provides methods of performing capacitance detection on a droplet actuator. A capacitor may be formed by the combination of a conductive droplet, an insulator layer, and one or more transport electrodes within a droplet actuator. At any given electrode, the capacitance measured is proportional to the footprint area of a droplet thereon. In some embodiments, the capacitance detection methods described herein may be used as a real-time verification tool in order to detect the absence, presence, and/or partial presence of a droplet at an electrode; analysis of droplet properties; measurement of droplet size or volume; optimization of the speed of droplet operations; and detection of air bubbles.

Additionally, the invention provides a capacitance detection circuits, droplet actuator cartridge and systems comprising the circuit, and related methods. The circuits are useful for performing capacitance detection in a droplet actuator. Capacitance detection permits analysis of a variety of operations in a droplet actuator. For example, capacitance detection may be used to determine at a designated location whether a droplet is present, partially present or absent. Capacitance at the location will vary depending on the presence, partial presence or absence of the droplet. This capability provides, among other things, a means of verifying whether a certain droplet operation or protocol is progressing as expected. Additionally, by use of existing droplet actuator structures, such as the existing voltage reference electrode of the top plate, which is common to all electrodes of the bottom plate, and the existing droplet actuation control switches, the invention facilitates the use of a single detection circuit for performing capacitance measurements at multiple electrodes.

Additionally, the invention provides methods of using impedance sensing for analyzing certain conditions that are present in a droplet actuator. In one embodiment, an impedance analyzer may be used to determine liquid temperature (e.g., droplet temperature). In another embodiment, an impedance analyzer may be used to determine the interfacial tension of, for example, the oil layer and/or droplets. In yet another embodiment, an impedance analyzer may be used to measure the heat produced as a byproduct of chemical reactions.

### 6.1 Example Capacitance Detection Circuits

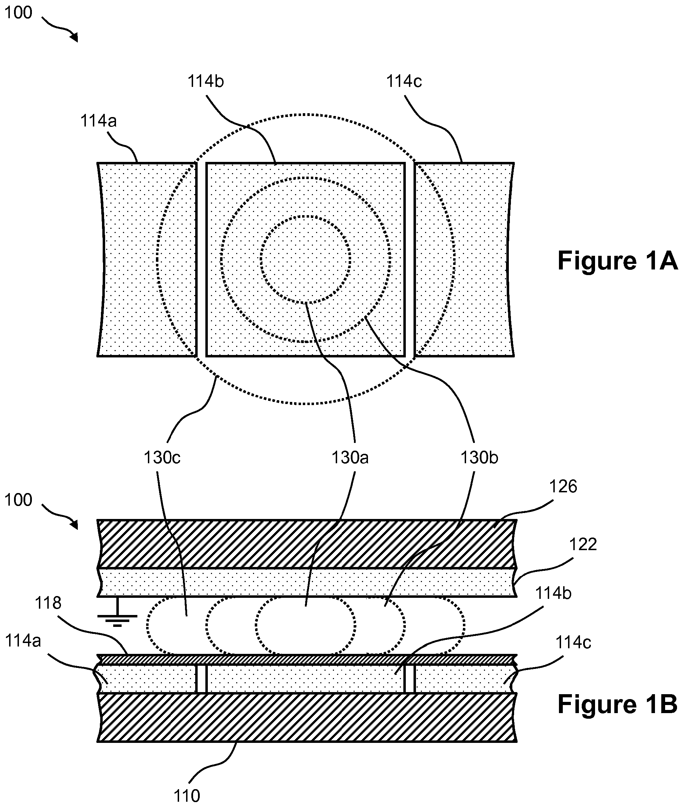

**Figures 1A and 1B** illustrate a top view and side view, respectively, of a droplet actuator 100. Droplet actuator 100 includes a first substrate 110, which may be, for example, a glass substrate or a printed circuit board; a plurality of electrodes 114, such as electrodes 114a, 114b, and 114c; an insulator layer 118, which may be, for example, a hydrophobic dielectric layer, and a reference electrode 122 disposed upon a second substrate 126, which may be, for example, a glass substrate. A gap between insulator layer 118 and reference electrode 122 forms a fluid path through which one or more droplets of various size and/or footprint may flow. A droplet positioned in the gap between insulator layer 118 and reference electrode 122 at the position of electrode 114b displaces a portion of the filler fluid (e.g., air, silicone oil) that would otherwise occupy that space and therefore results in a change in capacitance measured between electrode 114b and reference electrode 122. A droplet results in a change in measured capacitance if the dielectric properties of the droplet differ from the medium being displaced. For example, an oil droplet displacing air filler within the gap at the position of electrode 114b would result in an increased measured capacitance because the dielectric constant of oil is typically higher than air. Similarly the introduction of an air bubble at the position of electrode 114b when the actuator is filled with oil would reduce the capacitance measured between electrode 114b and reference 122. Because the capacitance contributed by the combination of droplet/bubble/filler within the gap is arranged in series with the capacitance contributed by solid dielectric 118 the relative magnitude of the change in capacitance would depend on the properties of dielectric 118 as well as any other capacitances in the system. We also note that presence of liquid filler fluid trapped or layered between the droplet and either of the actuator surfaces would also affect the measured capacitance.

When the droplet positioned between electrode 114b and reference 122 is substantially conductive and is in electrical communication with reference 122, then another capacitive effect is observed. In this case, the droplet effectively "shorts-out" the capacitor formed by the liquid filler fluid between the surface of dielectric 118 and reference 122. That is, the capacitive contribution of the liquid layer at the position of the droplet is effectively reduced such that the dielectric 118 contributes substantially all of the capacitance measured between electrode 114b and reference 122 at the position of the droplet. The capacitance associated with the overlap of the droplet and electrode is arranged in parallel with the capacitance associated with the portions of electrode 114b not overlapping the droplet and being covered with filler fluid. There is a certain amount of capacitance associated with the droplet fully covering the electrode and a certain amount of capacitance associated the droplet being fully absent from the electrode. Between these two extremes the amount of capacitance measured is proportional to the amount of overlap between the droplet and electrode. The total amount of area included in the overlap between the base of the droplet and the surface of the dielectric at the position of an electrode is referred to as the footprint of the droplet.

In one example, Figures 1A and 1B show a droplet 130a that is fully contained within the lateral extent of electrode 114b and that forms a certain footprint on electrode 114b; droplet 130b that is of a certain larger footprint than droplet 130a and which has a size that is roughly proportional to the size of electrode 114b; and droplet 130c that is of a certain larger footprint than both droplets 130a and 130b and is atop electrode 114b and overlaps onto adjacent electrodes 114a and 114c.

The combination of an insulator layer that is arranged between a conductive droplet, which may be connected to a reference potential, and another conductive layer effectively forms a parallel plate capacitor. More specifically and referring again to Figures 1A and 1B, insulator layer 118, which is the dielectric layer, is arranged between droplet 130a, 130b, or 130c, which has a certain amount of electrical conductivity, and one or more electrodes 114, thereby forming a plate capacitor. Droplet 130a, 130b, or 130c may be electrically connected to a reference electrode 122 and electrodes 114 may be electrically connected to a bias voltage.

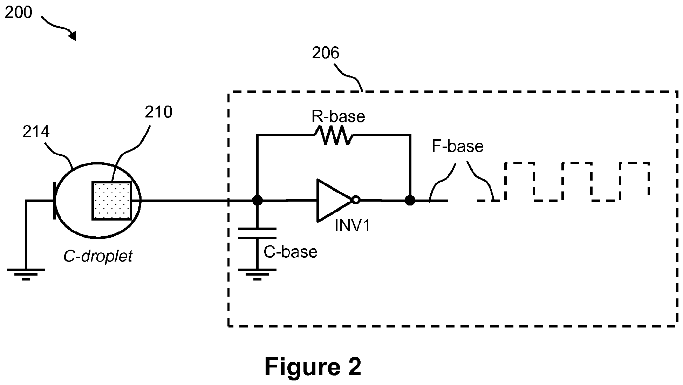

The amount of capacitance *C-droplet* measured due to the presence or absence of a droplet is a function of the droplet footprint area on that electrode. Because capacitance C = ε (A/d); where C is the capacitance in farads, F; ε is the permittivity of the insulator used; A is the area of each plate (in square meters); and d is the separation between the plates (in meters). Therefore and referring again to Figures 1A and 1B, the area of the footprint of droplet 130c on electrode 11b > the area of the footprint of droplet 130b on electrode 114b > the area of the footprint of droplet 130a on electrode 114b and, thus, the capacitance measured between droplet 130c and electrode 114b > the capacitance measured between droplet 130b and electrode 114b > the capacitance measured between droplet 130a and electrode 114b. More details of nonlimiting examples of methods of measuring the capacitance *C-droplet* during droplet actuator use are described with reference to Figures 2 through 7.

**Figure 2** illustrates a nonlimiting example of a capacitance detection circuit 200 for determining capacitance *C-droplet.* In particular, capacitance detection circuit 200 performs an active capacitance measurement by providing a reference signal that is applied to an electrode. For example, capacitance detection circuit 200 includes a ring oscillator circuit 206 that is formed of an inverter INV1 in combination with a base resistance R-base and a base capacitance C-base, which are arranged as shown in Figure 2. Resistance R-base and capacitance C-base form an RC circuit that determines a base oscillation frequency F-base. The input of ring oscillator circuit 206 is electrically connected to an electrode 210 upon which may be disposed a droplet 214, which may be connected to a reference potential. The droplet, such as droplet 214, controls a certain capacitance *C-droplet* between sensing electrode 210 and the reference potential that is in parallel with capacitance *C-base.* Consequently, the capacitance *C-droplet* adds to capacitance *C-base,* which controls the frequency *F-base.* A change in frequency *F-base,* which is the result of a change in capacitance *C-droplet* due to motion of the droplet 210, may be measurable by, for example, a pulse counter (not shown) that is connected to the output of ring oscillator circuit 206. The change in frequency *F-base* is inversely proportional to the change in capacitance *C-droplet,* i.e., the frequency *F-base* decreases as capacitance *C-droplet* increases. By calculating the difference between frequency *F-base* with and without the droplet present, a capacitance value may be determined, which may be correlated to the absence, presence, and/or partial presence of, for example, droplet 214 at electrode 210. Note that in this example, electrode 210 may be either biased or unbiased during the capacitance measurement.

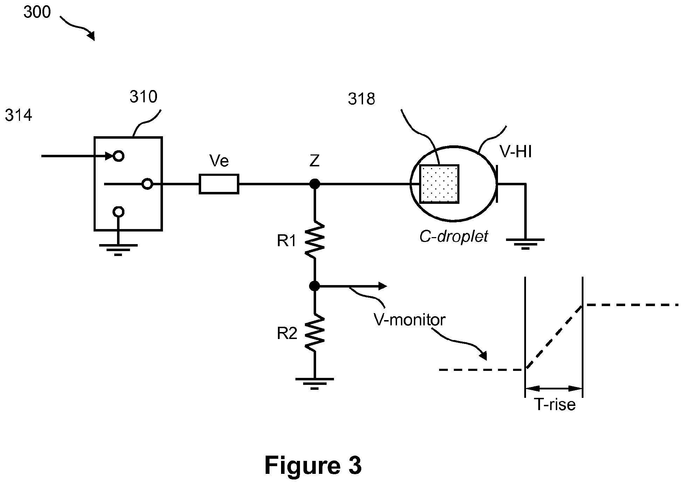

**Figure 3** illustrates another nonlimiting example of a capacitance detection circuit 300 for determining the capacitance of a droplet within a droplet actuator. In particular, capacitance detection circuit 300 performs a passive capacitance measurement by monitoring the charge time of capacitance *C-droplet.* For example, capacitance detection circuit 300 includes a transport electrode 310 upon which may be disposed a droplet 314, which may be grounded. When droplet 314 is fully or partially present it has a capacitance *C-droplet.* The control line of transport electrode 318 has a certain impedance Z and may be connected to either a bias voltage V-HI or to ground via a switch 310. Switch 310 may be any electronic switch mechanism.

When droplet 314 is fully or partially present, capacitance *C-droplet* is charged when transport electrode 310 is connected to bias voltage V-HI. By contrast, capacitance *C-droplet* is discharged when transport electrode 310 is connected to ground. An electrode voltage Ve, which may be a high voltage, at transport electrode 310 may be monitored by use of a voltage divider circuit, in order to provide a low voltage monitor. In one example, a resistor R1 and R2 are arranged in series between electrode voltage Ve and ground, and a voltage V-monitor is provided at a node between resistors R1 and R2. A rise time T-rise of voltage V-monitor when transport electrode 310 is switched from ground to bias voltage V-HI may be monitored. Consequently, when droplet 314 is fully or partially present at transport electrode 310, the capacitance *C-droplet* that is introduced causes the rise time T-rise of voltage V-monitor to increase. The change in T-rise, which is the result of introducing capacitance *C-droplet,* may be measurable by, for example, an analog-to-digital (A/D) converter (not shown) that is connected to voltage V-monitor. The change in T-rise at voltage V-monitor is proportional to the amount of capacitance *C-droplet,* i.e., T-rise increases as capacitance *C-droplet* increases. By calculating the difference between T-rise at voltage V-monitor with and without capacitance *C-droplet* present, a capacitance *C-droplet* value may be determined, which may be correlated to the absence, presence, and/or partial presence of, for example, droplet 314 at transport electrode 310.

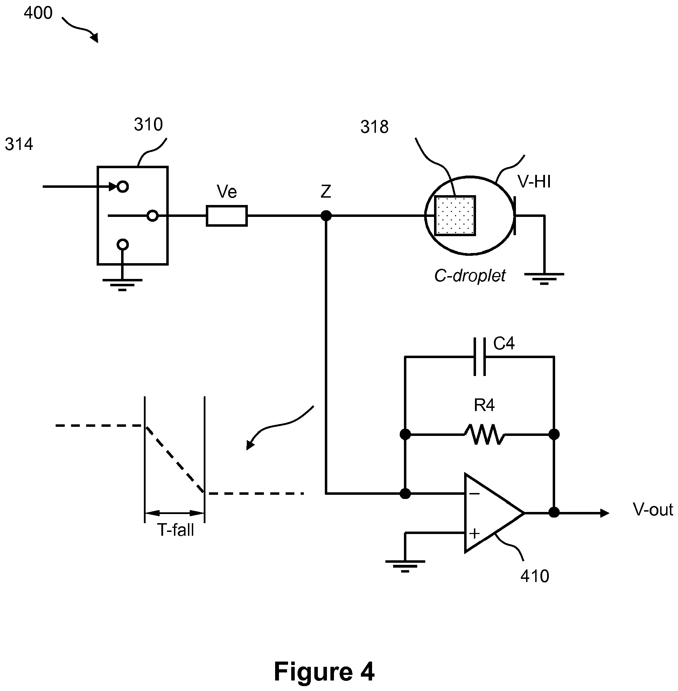

**Figure 4** illustrates yet another nonlimiting example of a capacitance detection circuit 400 for determining the capacitance of a droplet within a droplet actuator. In particular, capacitance detection circuit 400 performs a passive capacitance measurement by monitoring the discharge time of capacitance *C-droplet.* For example, capacitance detection circuit 400 is substantially the same as capacitance detection circuit 300 of Figure 3 except that it does not include a voltage divider circuit. Instead, electrode voltage Ve of capacitance detection circuit 400 is monitored directly via a charge integrating amplifier 410, which outputs a voltage V-out that is the integral of its input voltage. However, alternatively, the elements of capacitance detection circuit 300 and capacitance detection circuit 400 may be combined.

Transport electrode 310 is first connected to bias voltage V-HI via switch 318 for a period of time that allows capacitance *C-droplet* to be fully charged to a certain voltage. After capacitance C-*droplet* is fully charged, transport electrode 310 is then connected to ground via switch 318, which discharges capacitance *C-droplet* and, thus, electrode voltage Ve falls from the certain voltage to ground with a fall time of T-fall. Consequently, when droplet 314 is fully or partially present at transport electrode 310, the capacitance *C-droplet* that is introduced causes the fall time T-fall of electrode voltage Ve to increase. The integral of T-fall may be analyzed at V-out of charge integrating amplifier 410 by, for example, an A/D converter (not shown). The change in T-fall of electrode voltage Ve is proportional to the amount of capacitance *C-droplet,* i.e., T-fall increases as capacitance *C-droplet* increases. By calculating the difference between T-fall of electrode voltage Ve with and without capacitance *C-droplet* present, a capacitance *C-droplet* value may be determined, which may be correlated to the absence, presence, and/or partial presence of, for example, droplet 314 at transport electrode 310.

### 6.2 Example uses of Capacitance Detection

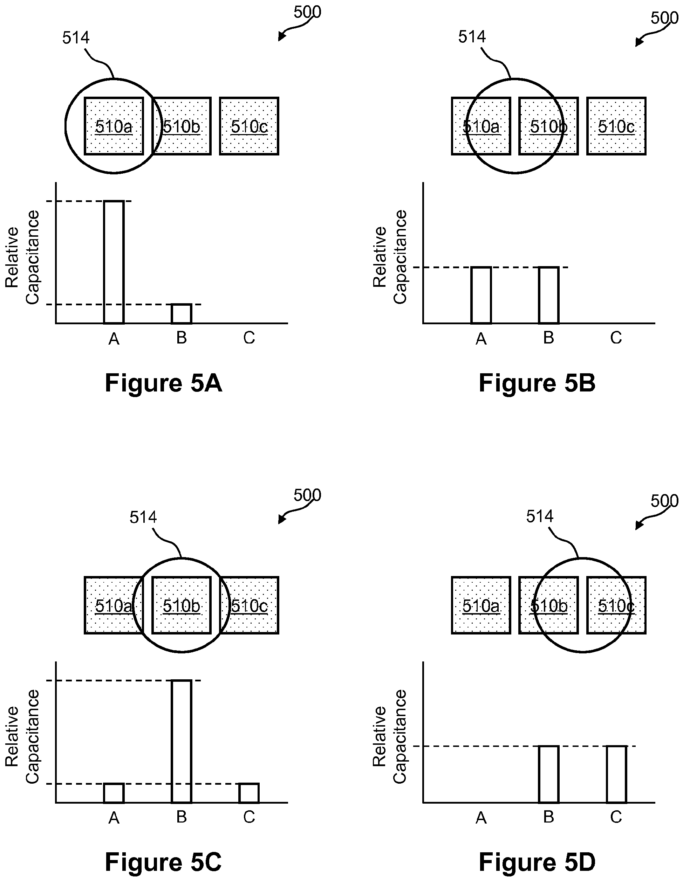

**Figures 5A, 5B, 5C, and 5D** illustrate a nonlimiting example of using capacitance detection in a droplet actuator. More specifically, Figures 5A, 5B, 5C, and 5D illustrate a set of nonlimiting exemplary steps of a droplet operation process 500, which demonstrates a simple inexpensive analysis of basic micro-fluidic functions by use of capacitance detection. In particular, Figures 5A, 5B, 5C, and 5D show the real-time progression of an exemplary droplet 514 moving along a line of transport electrodes 510, such as transport electrodes 510a, 510b, and 510c. In this example, each of transport electrodes 510a, 510b, and 510c are connected to a capacitance detection mechanism, such as, but not limited to, capacitance detection circuit 200 of Figure 2, capacitance detection circuit 300 of Figure 3, and capacitance detection circuit 400 of Figure 4, for measuring the capacitance *C-droplet.* In doing so, the absence, presence, partial presence, and/or location of droplet 514 along the line of transport electrodes 510 may be determined in real time. For each step shown by Figures 5A, 5B, 5C, and 5D, respectively, a bar graph of the relative capacitance *C-droplet* at each of transport electrodes 510a, 510b, and 510c is provided.

Figure 5A shows droplet 514 at a first location along the line of transport electrodes 510a, 510b, and 510c. More specifically, droplet 514 is centered upon transport electrode 510a and shows that the footprint area of droplet 514 is larger than the area of transport electrode 510a. Therefore, while droplet 514 centered upon transport electrode 510a, it also overlaps slightly the adjacent transport electrode 510b. The bar graph for Figure 5A of the relative amount of capacitance *C-droplet* shows that maximum capacitance *C-droplet* is detected at transport electrode 510a, a small capacitance C-droplet is detected at transport electrode 510b, and no capacitance *C-droplet* is detected at transport electrode 510c. As a result, without the need for visualization, it may be concluded that the location of droplet 514 is substantially at transport electrode 510a.

Figure 5B shows droplet 514 at a second location along the line of transport electrodes 510a, 510b, and 510c. More specifically, droplet 514 is bridging transport electrodes 510a and 510b. Therefore, a substantially equal portion of droplet 514 is upon each of transport electrodes 510a and 510b. The bar graph for Figure 5B of the relative amount of capacitance *C-droplet* shows that approximately half the maximum capacitance *C-droplet* is detected at each of transport electrodes 510a and 510b and no capacitance *C-droplet* is detected at transport electrode 510c. As a result, without the need for visualization, it may be concluded that the movement of droplet 514 from transport electrode 510a to 510b is progressing as expected.

Figure 5C shows droplet 514 at a third location along the line of transport electrodes 510a, 510b, and 510c. More specifically, droplet 514 is centered upon transport electrode 510b and shows that the footprint area of droplet 514 is larger than the area of transport electrode 510b. Therefore, while droplet 514 is centered upon transport electrode 510b, it also overlaps slightly the adjacent transport electrodes 510a and 510c. The bar graph for Figure 5C of the relative amount of capacitance *C-droplet* shows that a small amount of capacitance *C-droplet* is detected at transport electrode 510b, maximum capacitance *C-droplet* is detected at transport electrode 510b, and a small amount of capacitance *C-droplet* is detected at transport electrode 510c. As a result, without the need for visualization, it may be concluded that the movement of droplet 514 to substantially the position of transport electrode 510b has occurred as expected.

Figure 5D shows droplet 514 at a fourth location along the line of transport electrodes 510a, 510b, and 510c. More specifically, droplet 514 is bridging transport electrodes 510b and 510c. Therefore, a substantially equal portion of droplet 514is upon each of transport electrodes 510b and 510c. The bar graph for Figure 5D of the relative amount of capacitance *C-droplet* shows that no capacitance *C-droplet* is detected at transport electrode 510a and approximately half the maximum capacitance *C-droplet* is detected at each of transport electrodes 510b and 510c. As a result, without the need for visualization, it may be concluded that the movement of droplet 514 from transport electrode 510b to 510c is progressing as expected.

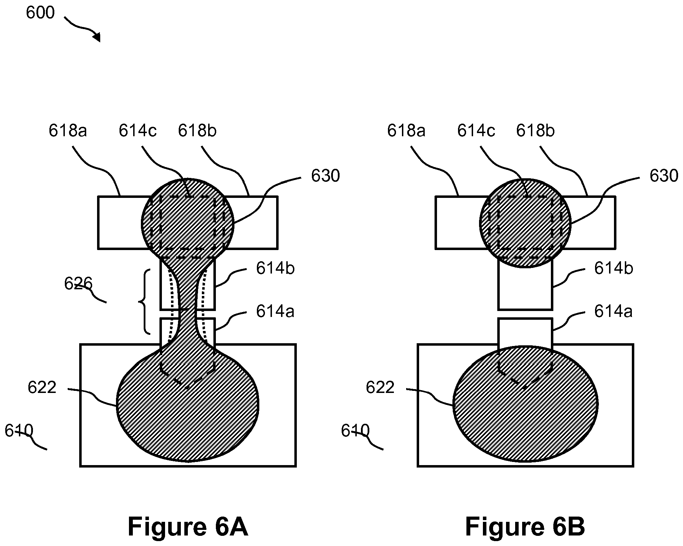

**Figures 6A and 6B** illustrate another nonlimiting example of using capacitance detection in a droplet actuator. More specifically, Figures 6A and 6B illustrate a nonlimiting example of a droplet actuator 600 that uses capacitance detection in a droplet splitting operation for determining droplet uniformity. In particular, Figure 6A shows the droplet splitting operation in progress and Figure 6B shows the droplet splitting operation when complete. Droplet actuator 600 includes a reservoir electrode 610 that outlets to a line of transport electrodes 614a, 614b, and 614c. Adjacent to and on either side of transport electrode 614c is a transport electrode 618a and 618b. In this example, each of transport electrodes 614a, 614b, 614c, 618a and 618b are connected to a capacitance detection mechanism, such as, but not limited to, capacitance detection circuit 200 of Figure 2, capacitance detection circuit 300 of Figure 3, and capacitance detection circuit 400 of Figure 4, for detecting the capacitance *C-droplet.*

Referring again to Figures 6A and 6B, a volume of fluid 622 is provided at reservoir electrode 610. During the droplet splitting operation, transport electrode 614c is activated and fluid 622 from reservoir electrode 610 is pinched off across a split zone 626 along transport electrodes 614a and 614b to form a droplet 630 at transport electrode 614c. The size of droplet 630 may vary, for example, because as the volume of fluid 622 at reservoir electrode 610 varies, the amount of fluid pinched off may vary. However, capacitance detection may be used in order to monitor the droplet splitting operation and provide uniform droplet dispensing. For example, by applying capacitance detection at transport electrode 614c and transport electrode 618a and transport electrode 618b the relative position and distribution of the liquid across each electrode may be determined. The progression of fluid 622 as it flows across portions of transport electrode 614a, transport electrode 614b, transport electrode 614c, transport electrode 618a and transport electrode 618b may be monitored in real-time. Similarly as transport electrode 614a and transport electrode 614b are deactivated the progression of the fluid as it drains back to reservoir electrode 610 can similarly be determined. Based on this the size of droplet 630 may be determined and adjustments to the process may be performed in order to ensure a reproducible droplet geometry at transport electrode 614c. Additionally, by applying capacitance detection at reservoir electrode 610 and transport electrode 614a and 614b the volume of fluid at reservoir electrode 610 and at split zone 626 may be determined and adjustments to the process may be performed in order to ensure a reproducible droplet geometry at transport electrode 614c. For example, if droplet 630 is too small, certain actions or adjustments to the droplet operation process may be performed, such as, but not limited to, returning the droplet to the reservoir, adding more volume to reservoir, adjusting the electrode bias voltage, adjusting the electrode bias time, and any combinations thereof. Adjustments may also be made in real-time as the droplet splitting process in being performed based on capacitance-based feedback from each of the electrodes participating in the process. For example, the amount of voltage on a particular electrode could be adjusted to maintain a particular rate of liquid drainage or certain electrodes could activated or deactivated at particular times depending on the location of the liquid and progression of the droplet splitting process.

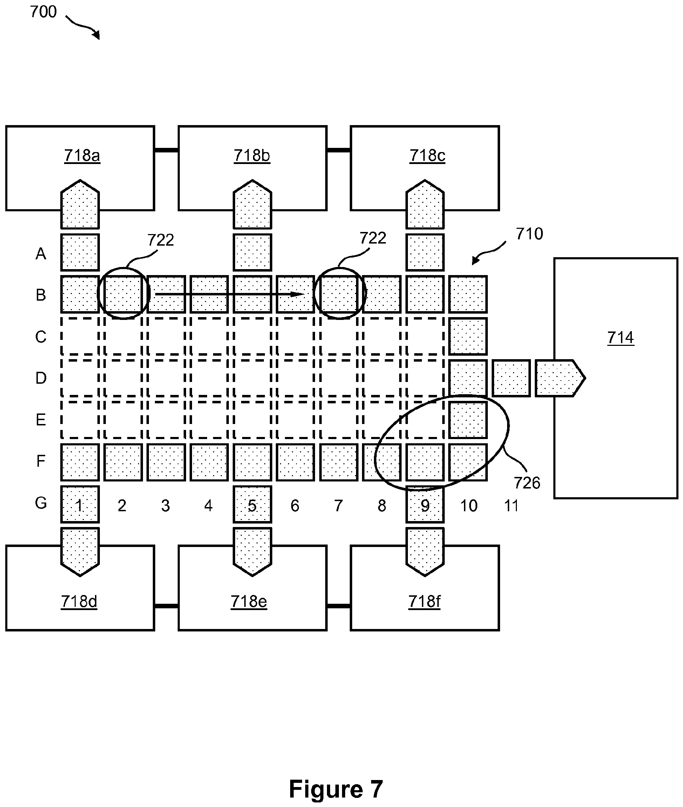

**Figure 7** illustrates yet another nonlimiting example of using capacitance detection in a droplet actuator. More specifically, Figure 7 illustrates a nonlimiting example of a droplet actuator 700 that uses capacitance detection in a droplet transport fault detection application and/or a quality control application. Droplet actuator 700 includes a set of transport electrodes that are arranged, for example, in a grid. In one example, droplet actuator 700 includes an array of transport electrodes 710 that are arranged along rows A through G and columns 1 through 11 and that are in fluid connection with a reservoir 714 and multiple receptacles 718, such as receptacles 718a through 718f. In this example, all or certain selected transport electrodes 710 are connected to a capacitance detection mechanism, such as, but not limited to, capacitance detection circuit 200 of Figure 2, capacitance detection circuit 300 of Figure 3, and capacitance detection circuit 400 of Figure 4, for detecting the droplet capacitance *C-droplet.*

Referring again to Figure 7, in a droplet transport fault detection application, capacitance detection may be used for determining whether an electrode has failed (e.g., due to open electrical connection). More specifically, capacitance detection may be used to monitor the flow within droplet actuator 700. In one example, Figure 7 shows a droplet 722 moving from, for example, grid location B2 to B7. If the expected change in capacitance is not measured at a certain selected transport electrode 710 along the path, a fault is detected, which may prompt certain action, such as, but not limited to, routing droplet 722 from grid location B2 to B7 via an alternate path. In one example, when a droplet transport fault is detected along the path from grid location B2 to B7, droplet 722 may be alternatively routed from grid location B2 to C2, then from C2 to C7, then from C7 to B7.

Referring again to Figure 7, in a quality control application at the time of manufacture or operation of the device, when filling with oil the fluid path within a droplet actuator, such as within droplet actuator 700, the presence of air bubbles may be determined using capacitance detection. In one example, Figure 7 shows an air bubble 726 that is trapped within droplet actuator 700 near one or more transport electrodes 710, which is problematic. Analyzing the capacitance profile of each transport electrode 710 in oil may provide an indication of whether an air bubble is present and its position and extent within the droplet actuator. When a bubble is detected, the device may be reloaded with oil to remedy the problem.

In another quality control application at the time of manufacture, a droplet actuator, such as droplet actuator 700, may be filled with a conductive fluid, such as water. Then the capacitance profile of each transport electrode 710 in a conductive fluid may be analyzed in order to determine whether the capacitance profile for each transport electrode 710 matches an expected capacitance profile. In this way, an open transport electrode 710 or a shorted transport electrode 710 may be detected.

### 6.3 Capacitance Detection Architecture

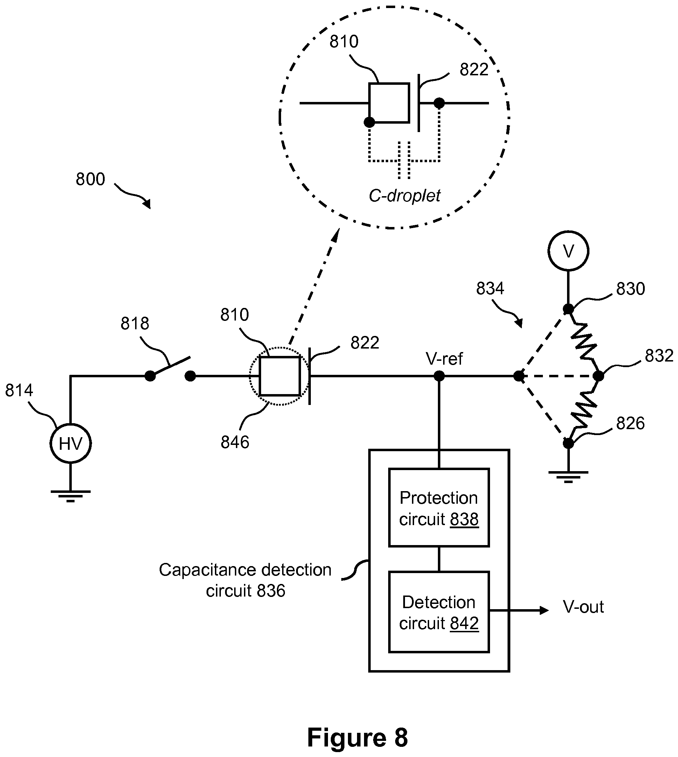

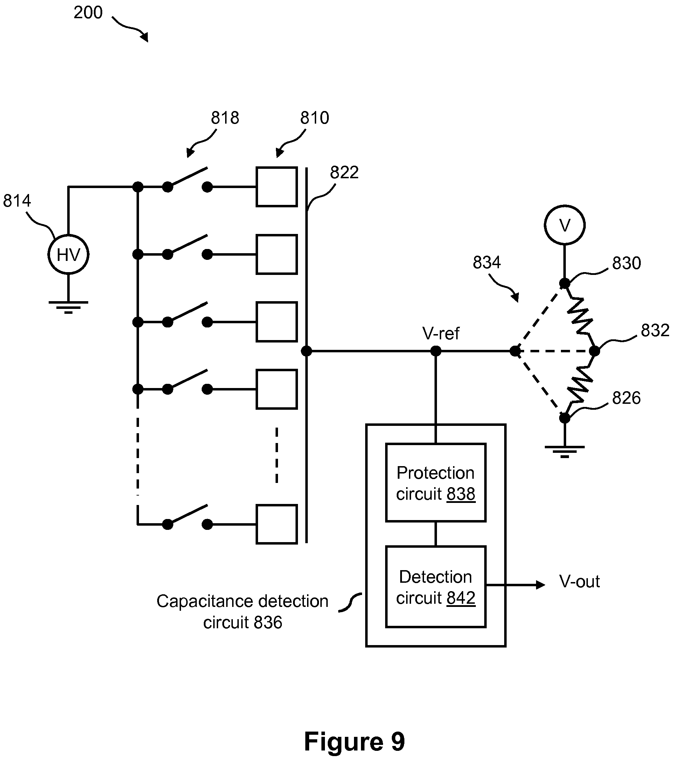

**Figure** 8 illustrates a schematic diagram of an embodiment of a droplet actuation circuit 800 of the invention. Droplet actuation circuit 800 includes a capacitance detection circuit and may be used for performing a capacitance measurement at any electrode of a droplet actuator, e.g., for performing droplet detection. Droplet actuation circuit 800 may include an electrode 810, e.g., droplet actuation electrode, for performing droplet operations. Electrode 810 is electrically connected to a high-voltage supply 814, e.g., at an electrowetting voltage, via an electronic switch 818. Electronic switch 818 may be the droplet actuation switch for connecting/disconnecting the voltage of high-voltage supply 814 to/from electrode 810. Electrode 810, high-voltage supply 814, and electronic switch 818 may in some embodiments be associated with the bottom plate (not shown) of a droplet actuator (not shown). Additionally, the droplet actuator may have arrays and/or paths of electrodes 810 for performing droplet operations. Figure 9 illustrates additional details of a droplet actuation circuit that includes multiple electrodes.

Droplet actuation circuit 800 further includes a reference electrode 822 that may be electrically connected to multiple nodes via an electronic switch. In one example, reference electrode 822 may be electrically connected to a ground node 826, a voltage node 830, or a high-impedance node 832 via an electronic switch 834, e.g., a 10 position electronic switch. Reference electrode 822, ground node 826, voltage node 830, high-impedance node 832, and electronic switch 834 may in some embodiments be associated with the top plate (not shown) of a droplet actuator. When reference electrode 822 is electrically connected to ground node 826, it serves as a ground reference plane for the droplet actuator. When reference electrode 822 is electrically connected to voltage node 830, it serves as a voltage reference plane for the droplet actuator. When reference electrode 822 is electrically connected to high-impedance node 832, it is substantially disconnected from ground node 826 and voltage node 830 and is, thus, considered in a "float" state.

The combination of electrode 810, high-voltage supply 814, electronic switch 818, reference electrode 822, ground node 826, voltage node 830, high-impedance node 832, and electronic switch 834 is included in the typical infrastructure of a droplet actuator. However, in addition to these typical elements of a droplet actuator, the invention provides a capacitance detection circuit 836 that includes a protection circuit 838 and a detection circuit 842. More specifically, a voltage, V-ref, at reference electrode 822 is electrically connected to an input of protection circuit 838 of capacitance detection circuit 836. An output of protection circuit 838 is electrically connected to an input of detection circuit 842 of capacitance detection circuit 836. An output voltage, V-out, of detection circuit 842 is provided for monitoring by external resources (not shown). Protection circuit 838 is provided to protect detection circuit 842 from damage due to high voltage when electronic switch 834 is connected to voltage node 830.

Figure 8 also shows that when a droplet 846 is present at electrode 810, the droplet 846 has a certain capacitance *C-droplet* between electrode 810 and reference electrode 822. By contrast, when droplet 846 is not present at electrode 810, capacitance *C-droplet* does not exist between electrode 810 and reference electrode 822.

In operation, during droplet operations, reference electrode 822 may be electrically connected, for example, to ground node 826 via electronic switch 834 and droplet operations may occur at electrode 810 under the control of electronic switch 818. However, during droplet detection operations, reference electrode 822 is electrically connected to high-impedance node 832 via electronic switch 834, to place reference electrode 822 in a "float" state. Additionally, electronic switch 818 that is associated with electrode 810 serves as a rising edge generator. More specifically, a rising edge at electrode 810 is generated by toggling electronic switch 818 from an open state to a closed state, thereby causing a voltage transition to occur at electrode 810 from about 0 volts to about the value of high-voltage supply 814. In this way, the capacitive energy that is caused by the presence of capacitance *C-droplet* of droplet 846 at electrode 810 is coupled to reference electrode 822, which then is coupled to protection circuit 838 and passed to detection circuit 842 of capacitance detection circuit 836. This capacitive energy generates is a voltage pulse at V-ref that is proportional to the capacitance *C-droplet.*

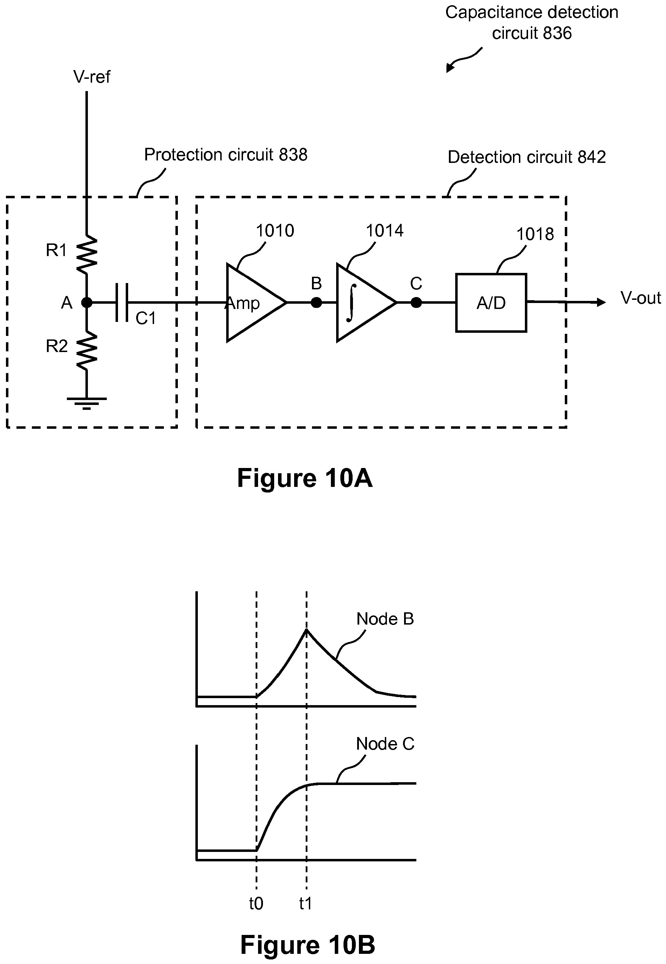

The voltage pulse that is present at the V-ref node, which may be a high voltage pulse, is processed via protection circuit 838 and detection circuit 842 of capacitance detection circuit 836 to provide a digital V-out value that reflects the magnitude of capacitance *C-droplet.* In one example, when the digital V-out value of detection circuit 842 is about 0 volts, this indicates that there is no droplet 846 present at electrode 810. In another example, when the digital V-out value of detection circuit 842 is a certain expected value that is greater than about 0 volts, this indicates that droplet 846 is present at electrode 810. In this way, capacitance detection circuit 836 provides a way to detect the presence or absence of a droplet at a certain electrode by detecting the presence or absence of capacitance *C-droplet.* Figures 10A and 10B describe more details of an example capacitance detection circuit that includes a detection circuit and a protection circuit.

**Figure 9** illustrates a schematic diagram of an embodiment of a droplet actuation circuit 900 that includes a capacitance detection circuit. The capacitance detection circuit may, for example, be used for a capacitance measurement at any electrode of a droplet actuator, e.g., for performing droplet detection. Droplet actuator circuit 900 is substantially the same as droplet actuator circuit 800 of Figure 8, except for the illustration of multiple electrodes 810 and the associated bank of electronic switches 818. Figure 9 shows that all electronic switches 818 are connected to a common high voltage of high-voltage supply 814. In this example, a rising edge may be generated by activating the electronic switch 818 that is associated with an electrode 810 of interest and capacitance detection circuit 836 may be used to detect the presence or absence of capacitance *C-droplet* at the electrode 810 of interest. A sequential operation may occur, i.e., sequencing from one electrode 810/electronic switch 818 pair to the next, by which capacitance detection takes place from one electrode 810 to the next.

### 6.4 Capacitance Detection Circuit

**Figure 10A** illustrates a schematic diagram of an embodiment of a capacitance detection circuit, such as capacitance detection circuit 836, of the invention that may be used in a droplet actuator for the purpose of performing droplet detection. Capacitance detection circuit 836 includes protection circuit 838 and detection circuit 842. More specifically, the input of protection circuit 838 is fed, for example, by voltage V-ref of droplet actuator circuit 800 or 900 of Figure 8 or 9, respectively. The output of protection circuit 838 feeds the input of detection circuit 842, which provides a digital V-out value.

Additionally, protection circuit 838 of capacitance detection circuit 836 includes a voltage divider network, such as a resistor R1 and R2 that are electrically connected in series, as shown in Figure 10A. A voltage node A between resistor R1 and R2 is electrically connected to one side of a capacitor C1. The opposite side of capacitor C1 is electrically connected to the input of detection circuit 842. Because of the action of the voltage divider network, which is formed by resistors R1 and R2, a fraction of the voltage value of V-ref is present at voltage node A. The values of resistors R1 and R2 are such that a suitably safe, low-voltage at node A feeds the input of detection circuit 842, to ensure that a high voltage at V-ref does not damage the components of detection circuit 842. Additionally, capacitor C1 provides an alternating current (AC) coupling mechanism for coupling the AC components only of V-ref to detection circuit 842.

Additionally, detection circuit 842 of capacitance detection circuit 836 includes an amplifier 1010, a charge integrating amplifier 1014, and an analog-to-digital (A/D) converter 1018, which are electrically connected as shown in Figure 10A. Amplifier 1010 may, for example, be a conventional operational amplifier device that scales its input voltage either up or down to any suitable voltage for feeding the next signal processing stage, the charge integrating amplifier 1014. Alternatively, amplifier 1010 may serve as a buffer only, to convert the input signal impedance to a certain impedance value that is suited to pass to the next signal processing stage, charge integrating amplifier 1014. Charge integrating amplifier 1014 may, for example, be a conventional charge integrating amplifier that generates an output voltage (e.g., voltage node C) that is the integral of its input voltage (e.g., voltage node B), which is illustrated in Figure 10B. A reason for integrating the output of amplifier 1010 is to render the signal less sensitive to stray capacitances that may be present at electrode 810, while still capturing the capacitance across droplet 846. A/D converter 1018 may, for example, be a conventional n-bit A/D converter device for converting an analog input voltage to an n-bit digital word. For example, A/D converter 1018 may be an 8-bit, 10-bit, or 16-bit A/D converter, depending on a desired resolution.

Referring again to Figures 8, 9, 10A, and 10B, the operation of capacitance detection circuit 836 may be summarized as follows. Reference electrode 822 is electrically connected to high-impedance node 832 via electronic switch 834, to place reference electrode 822 in a "float" state, which provides electrical isolation from ground node 826 and voltage node 830 via a high resistance (e.g., Megaohms). For an electrode 810 of interest, its associated electronic switch 818 is toggled from open to closed to generate a rising edge at the electrode 810 of interest. Assuming a droplet 846 is present at the electrode 810 of interest, capacitive energy is coupled to reference electrode 822 that is proportional to capacitance *C-droplet.* Protection circuit 838 of capacitance detection circuit 836 reduces the amplitude of V-ref to a suitably low voltage via resistors R1 and R2. Capacitor C1 then couples the low-voltage pulse at node A to amplifier 1010, which scales the low-voltage pulse to any usable value for feeding charge integrating amplifier 1014. Charge integrating amplifier 1014 generates an output voltage (e.g., voltage node C) that is the integral of its input voltage (e.g., voltage node B), as shown in Figure 10B. A/D converter 1018 performs an analog-to-digital conversion of the output of charge integrating amplifier 1014. A/D converter 1018 may be sampled, for example, at some time after time t1 (see Figure 10B) and its digital V-out value is captured by an external processor (not shown) for analysis. In one example, A/D converter 1018 may be sampled once only at some time after time t1 (see Figure 10B) to arrive at a measurement of capacitance *C-droplet.* In another example, A/D converter 1018 may be sampled multiple times after time t1 and then the multiple digital V-out values may be averaged to arrive at a measurement of capacitance *C-droplet.*

In one example application, a capacitance detection circuit of the invention may be used for validating one or more droplet operations on a droplet actuator. For example, the circuit may be used to verifying whether one or more droplet operations in a certain protocol have been achieved. In one embodiment, as a certain droplet is moved via droplet operations from one electrode to the next and a capacitance detection operation may occur after each movement to verify that the droplet has moved as expected.

In another example application, a capacitance detection circuit, such as capacitance detection circuit 836, may be used for performing a droplet actuator characterization operation. For example, a droplet may be moved along a line of electrodes toward a designated detection location at a certain droplet actuation frequency. At the end of the sequence, a capacitance detection operation may occur at the designated detection location, to verify that the droplet arrived successfully. This sequence may be repeated at higher and higher droplet actuation frequencies until the droplet actuator fails. In performing this characterization operation using the capacitance detection circuit of the invention, the droplet actuation frequency specification of the droplet actuator may be established.

### 6.5 Correlating Impedance Measurements to Certain Conditions Inside a Droplet Actuator

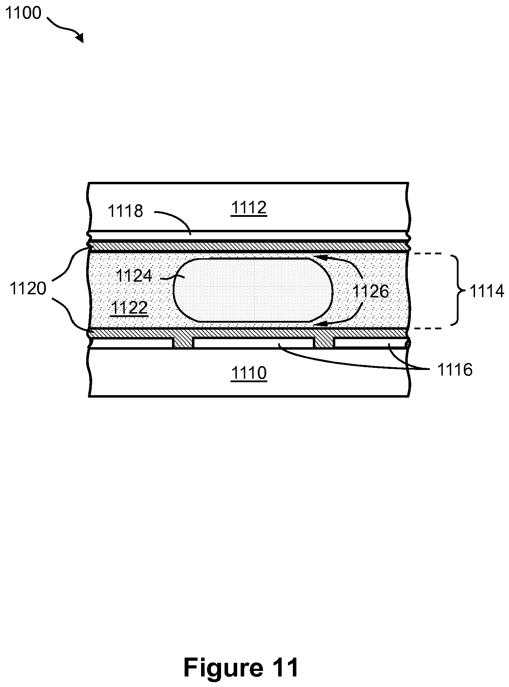

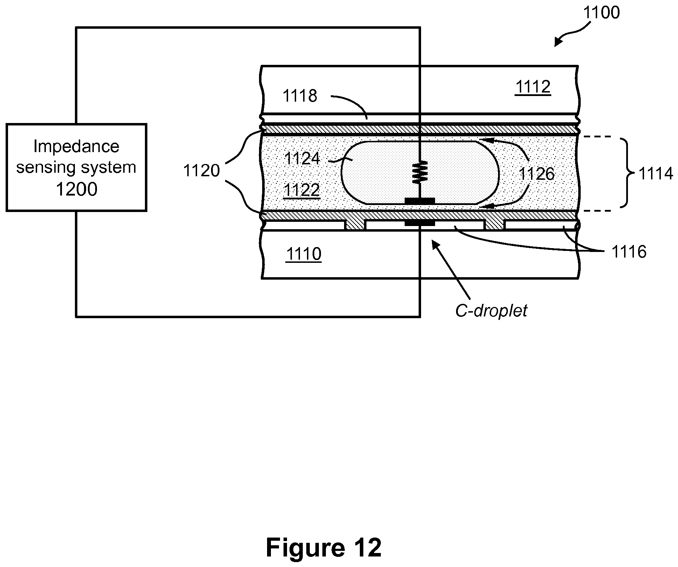

**Figure 11** illustrates a side view of a portion of an example of a droplet actuator 1100, showing an oil film between the droplet and the surfaces of the droplet actuator. **Figure 12** illustrates a side view of droplet actuator 1100 of Figure 11 and a schematic diagram showing an impedance sensing system with respect to the droplet and oil film. Referring to Figures 11 and 12, droplet actuator 1100 is an example of a droplet actuator in which impedance measurements thereof may be correlated to certain conditions that may be present therein.

Droplet actuator 1100 may include a bottom substrate 1110 that is separated from a top substrate 1112 by a gap 1114. Bottom substrate 1110 may include an arrangement of droplet operations electrodes 1116 (e.g., electrowetting electrodes). Bottom substrate 1110 may, for example, be formed of a printed circuit board (PCB). Droplet operations are conducted atop droplet operations electrodes 1116 on a droplet operations surface. More details of an example of bottom substrate 1110 are described with reference to Figure 12.

Top substrate 1112 may be formed of a material that is substantially transparent to visible and/or ultraviolet (UV) light, such as, but not limited to, injection-molded plastic and glass. Top substrate 1112 may include a reference electrode 1118. For example, reference electrode 1118 is an electrical ground reference electrode. Reference electrode 1118 may be formed of an electrically conductive material that is substantially transparent to visible and/or ultraviolet (UV) light, such as, but not limited to, indium-tin oxide (ITO).

The surfaces of bottom substrate 1110 and top substrate 1112 that are facing gap 1114 may be coated with a hydrophobic layer. For example, a hydrophobic layer 1120a is disposed on bottom substrate 1110 (i.e., atop droplet operations electrodes 1116). Similarly, a hydrophobic layer 1120b is disposed on the surface of top substrate 1112 (i.e., atop reference electrode 1118). Hydrophobic layers 1120 may be formed of, for example, a fluorinated hydrophobic coating, a hydrocarbon coating, a silicone coating, and/or an organic hydrophobic coating. Hydrophobic layers 1120 may also serve as dielectric (or insulator) layers.

A quantity of oil filler fluid 1122 fills gap 1114 of droplet actuator 1100. Oil filler fluid 1122 may, for example, be low-viscosity oil, such as silicone oil. Additionally, droplets, such as a droplet 1124, may be present in gap 1114 of droplet actuator 1100. Droplet 1124 may, for example, be a droplet of sample fluid to be evaluated. Hydrophobic layer 1120 has an affinity to an oil filler fluid 1122 that is in gap 1114. By contrast, hydrophobic layer 1120 does not have an affinity to aqueous substances, such as a droplet 1124, which may be present along gap 1114. As droplet 1124 moves along gap 1114, an oil film 1126 of oil filler fluid 1122 forms between droplet 1124 and the surfaces of droplet actuator 1100. Because of oil film 1126, a liquid-liquid (droplet/oil) interface is formed. Droplet 1124 has a certain interfacial tension. Additionally, certain characteristics of oil film 1126 of oil filler fluid 1122 (e.g., thickness and uniformity) may be affected by the interfacial tension between oil filler fluid 1122 and droplet 1124.

Certain parameters for maintaining the thickness and/or uniformity of the oil film in a droplet actuator may include, but are not limited to, interfacial tension between the oil film (i.e., oil phase) and the surface of the droplet actuator (i.e., solid phase), interfacial tension between liquid (i.e., aqueous phase) and the surface of the droplet actuator, viscosity of the oil phase, applied voltage, size of the gap between the top and bottom substrates of the droplet actuator, and any combinations thereof.

With respect to interfacial tension, impedance measurements in a droplet actuator have a strong dependence on temperature. The invention provides novel ways of correlating impedance measurements in a droplet actuator with changes in the droplet and/or oil filler fluid that affect surface tension, such as changes in the droplet and/or oil filler fluid due to temperature. Figure 12 shows an example of an impedance sensing system (or impedance analyzer) in combination with a droplet actuator.

Referring to Figure 12, an impedance sensing system 1200 is electrically connected to droplet actuator 1100. Impedance sensing system 1200 may be, for example, an impedance spectrometer. The circuit formed by impedance sensing system 1200 and droplet actuator 1100 includes capacitance *C-droplet.* In this example, capacitance *C-droplet* is essentially the capacitance that is developed across the oil film 1126 between droplet 1124 and the droplet operations electrode 1116.

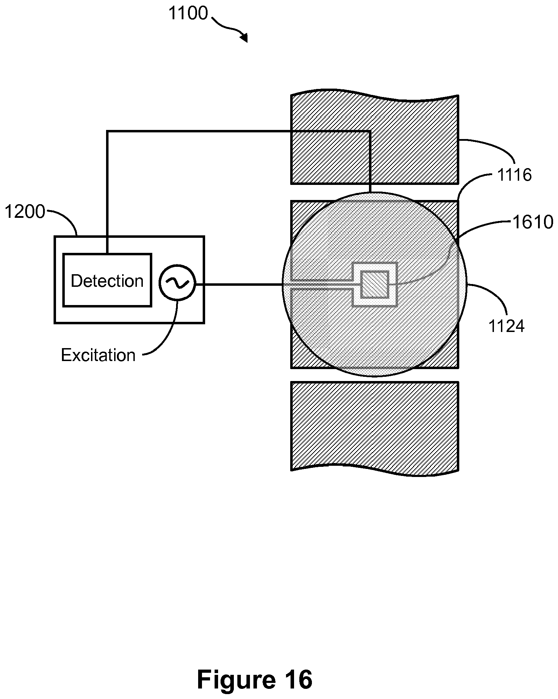

Impedance sensing system 1200 may be used to monitor the capacitive loading of the droplet operations electrode to infer droplet overlap and by inference, the volume supported by each electrode. In another example, impedance can be monitored by using electrodes (not shown) that are separate from the droplet operations electrodes (e.g., Figures 16, 17, and 19).

The thickness of oil film 1126 varies with variations in interfacial tension between the droplet and oil filler fluid 1122. For example, the interfacial tension may vary with temperature. Also, the interfacial tension may vary with the chemistry of the oil and/or the droplet. Further, any variation in the thickness of oil film 1126 has a direct correlation to impedance measured at the droplet - as the oil thickness changes the impedance changes. Consequently, as the thickness of oil film 1126 changes, the capacitance *C-droplet* changes, and the impedance measurement changes. For example, the thinner the oil film 1126, the lower the impedance value. Therefore, anything that changes the interfacial tension between the droplet and oil may be detected using impedance measurements.

Referring again to Figures 11 and 12, the invention provides ways of correlating impedance measurements in a droplet actuator with changes in the droplet that affect surface tension. Because impedance measurements in a droplet actuator have a strong dependence on temperature, impedance measurements may be used to calculate the temperature of droplets in a droplet actuator without the need for installing discrete thermal sensing devices (e.g., thermistors) in the droplet actuator. This correlation of impedance measurements to temperature is due to temperature dependence of the interfacial tension. That is, as the temperature of the water/oil increases, the interfacial tension drops, allowing the oil layer beneath the droplet to thin out, altering (i.e., reducing) the effective dielectric thickness seen by an impedance analyzer (e.g., impedance sensing system 1200), thereby increasing the admittance. *Admittance* is the measure of the ability of a circuit to conduct an alternating current.

In one aspect of the invention, the temperature inside a droplet actuator may be measured without the use of, for example, thermistors. For example, thermistor-less measurement of thermo-cycled droplets may be accomplished, potentially improving the quality of polymerase chain reaction (PCR) results. Melt crystals can be used to calibrate the system. Additionally, a standard temperature assessment droplet composition that has a known interfacial tension may be used, for example, to transport through a temperature zone to detect temperature.

In another aspect of the invention, the impedance analyzer (e.g., impedance sensing system 1200) may be used to observe temperature dependent phenomena related to the droplet. This is due (at least in part) to the temperature dependence of the interfacial tension. The invention provides a way to measure interfacial tension by indirectly observing the thickness of the oil film layer between the droplet and the surfaces of the droplet actuator. Examples of applications of the invention may include, but are not limited to, the following.
- Measuring interfacial tensions of liquids that have unknown composition;
- Closed-loop addition of surfactant materials to modify the interfacial tension of unknown samples in real time;
- Detection of the outcome of reactions that produce products that alter the interfacial tension between the droplet and the filler fluid as a byproduct, and
- Active manipulation of electrowetting control parameters (voltages, transport rates) as a result of enhanced understanding of interfacial tension values.

In another aspect of the invention, the amount of heat produced as a byproduct of certain chemical reactions may be measured using impedance measurements. That is, with the ability to measure droplet temperature with high sensitivity using an impedance analyzer (e.g., impedance sensing system 1200), the temperature inside a droplet actuator that is the result of chemical reactions that are exothermic and/or endothermic can be detected by observing an apparent change in impedance.

In yet another aspect of the invention, the combination of observable characteristics (optical observation) of the droplet and impedance measurements may be used to draw certain conclusions. For example, one can observe that the size of the droplet is normal, yet the impedance measurement is changing, therefore a conclusion may be made that certain conditions are present inside the droplet actuator, such as contamination is present, too much surfactant is present, and/or that something is wrong in the protocol or chemistry. Being able to draw certain conclusions about the condition of droplet actuators may be useful, for example, in a quality control (QC) process - verify observable droplet size, chemistry, temperature. If the impedance measurement is not as expected, it may be concluded that something is wrong with one or more criterion.

### 6.5.1 Systems and Methods of Performing Impedance Measurements in a Droplet Actuator

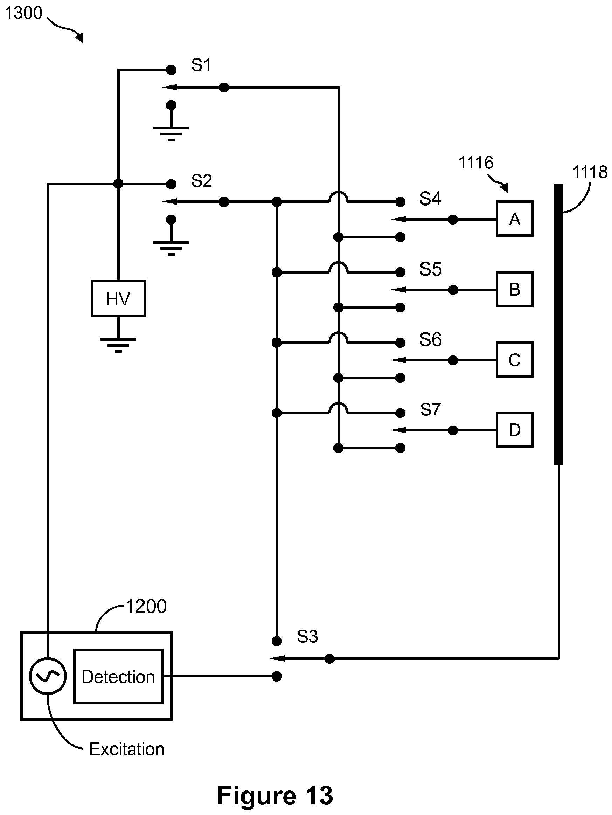

**Figure 13** illustrates a schematic diagram of an example of a system 1300 for controlling droplet operations and/or impedance sensing operations of a droplet actuator. System 1300 may include impedance sensing system 1200 and a high voltage (HV) source that are electrically connected to the arrangement of droplet operations electrodes 1116 through an arrangement of switches.

For example, switches S1, S2, and S3 may be used for configuring the outputs of impedance sensing system 1200 and/or the HV source and the electrical ground return path with respect to the droplet operations electrodes 1116. By way of example, system 1300 shows four droplet operations electrodes 1116 (e.g., droplet operations electrodes 1116A, 1116B, 1116C, and 1116D) and electrical ground reference electrode 1118. A switch S4 controls the voltage/signal connecting to droplet operations electrode 1116A. A switch S5 controls the voltage/signal connecting to droplet operations electrode 1116B. A switch S6 controls the voltage/signal connecting to droplet operations electrode 1116C. A switch S7 controls the voltage/signal connecting to droplet operations electrode 1116D.

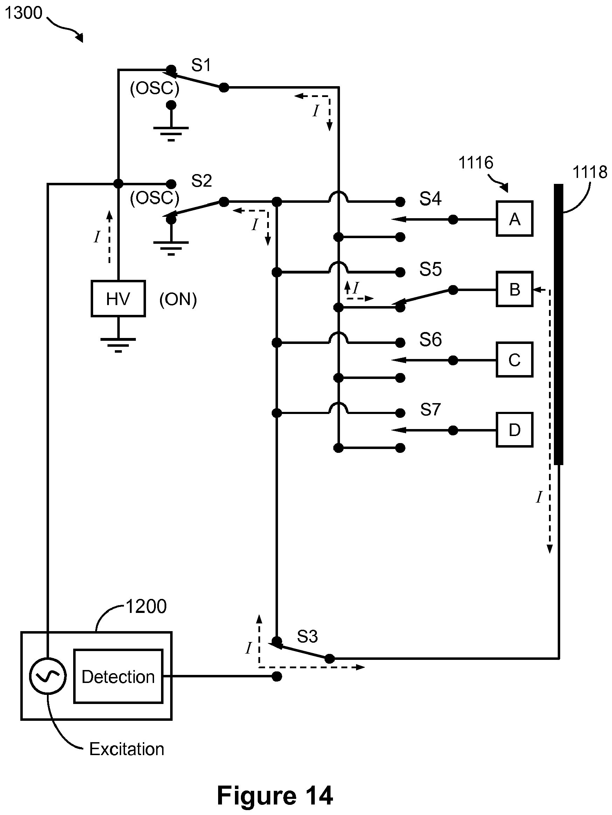

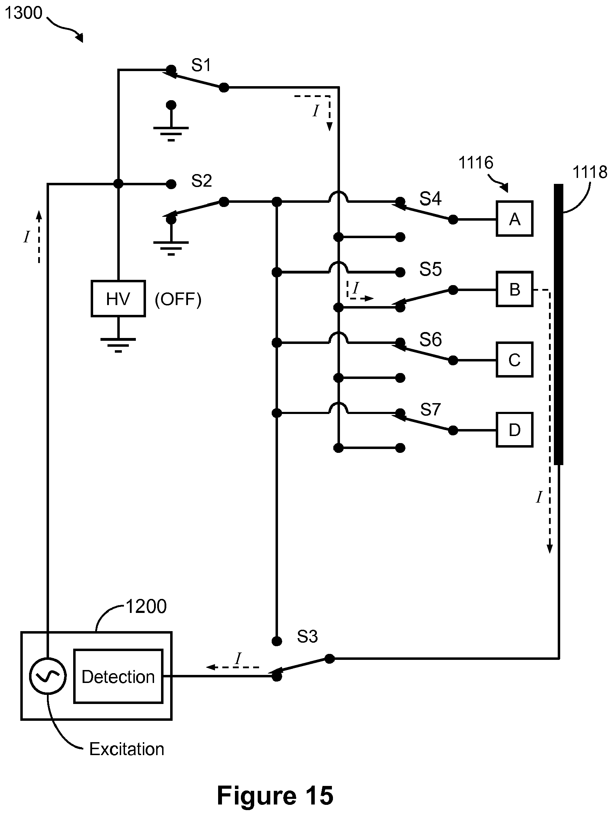

The states of switches S1 through S7 are set depending on whether droplet operations are occurring, whether impedance sensing operations are occurring, and on the droplet operations electrode 1116 of interest. Further, impedance sensing system 1200 includes an excitation portion for generating an excitation signal and a detection portion for processing the return signal. Figure 14 shows system 1300 configured for conducting droplet operations, while Figure 15 shows system 1300 configured for conducting impedance sensing operations.

**Figure 14** illustrates a schematic diagram of system 1300 of Figure 13 that is configured for conducting droplet operations. In this example, an electrowetting voltage is supplied at droplet operations electrode 1116B, which is the droplet operations electrode of interest. For example, HV source is turned on, switches S1 and S2 may be oscillating 180° out of phase between the HV source and ground to create an AC signal, and switch S3 sets the return path, which is through reference electrode 1118, through switch S2. Switch S5 connects droplet operations electrode 1116B to the HV source, which is through switch S1. Switches S4, S6, and S7 are open. Accordingly, HV source is being used with respect to droplet operations electrode 1116B and impedance sensing system 1200 is not being used.

**Figure 15** illustrates a schematic diagram of system 1300 of Figure 13 that is configured for conducting impedance sensing operations. In this example, an excitation signal is supplied at droplet operations electrode 1116B, which is the droplet operations electrode of interest. For example, HV source is turned off, switch S1 is connected to the excitation portion of impedance sensing system 1200, switch S2 is connected to ground, and switch S3 sets the return path, which is through reference electrode 1118, to the detection portion of impedance sensing system 1200. Switch S5 connects droplet operations electrode 1116B to impedance sensing system 1200, which is through switch S1. Switches S4, S6, and S7 may be set to ground. Accordingly, impedance sensing system 1200 is being used with respect to droplet operations electrode 1116B and HV source is not being used.

**Figure 16** illustrates a top view of a portion of the droplet operations electrodes 1116 of droplet actuator 1100 of Figure 11, which includes at least one embedded impedance electrode that is electrically connected to impedance sensing system 1200. Figure 16 shows one example of a way to monitor impedance using electrodes that are separate from the droplet operations electrodes. In this example, at least one impedance electrode 1610 is embedded in the footprint of at least one droplet operations electrode 1116, which is in a line, path, or array of other droplet operations electrodes 1116 of droplet actuator 1100. For example, impedance electrode 1610 is a small-footprint electrode that is embedded at about the center of a large-footprint droplet operations electrode 1116. Full contact between a droplet (e.g., droplet 1124) and impedance electrode 1610 is substantially ensured because the footprint of impedance electrode 1610 is small compared with the footprint of droplet 1124 and of droplet operations electrode 1116.

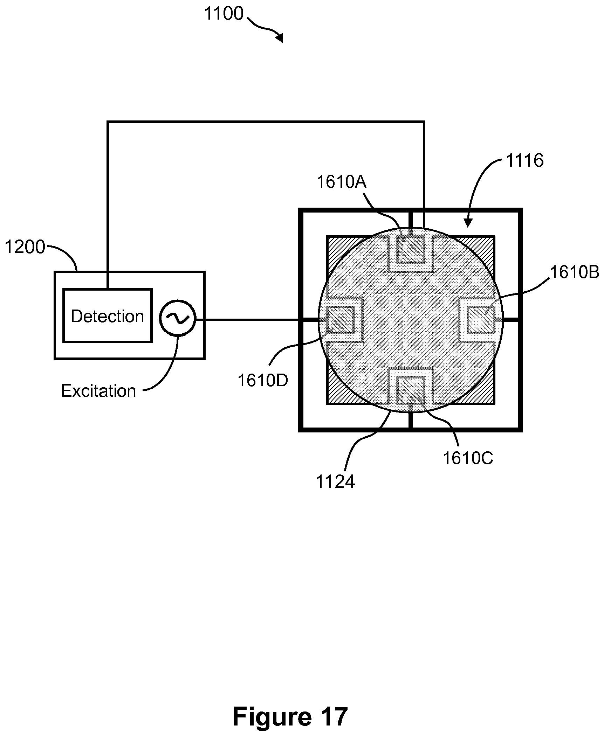

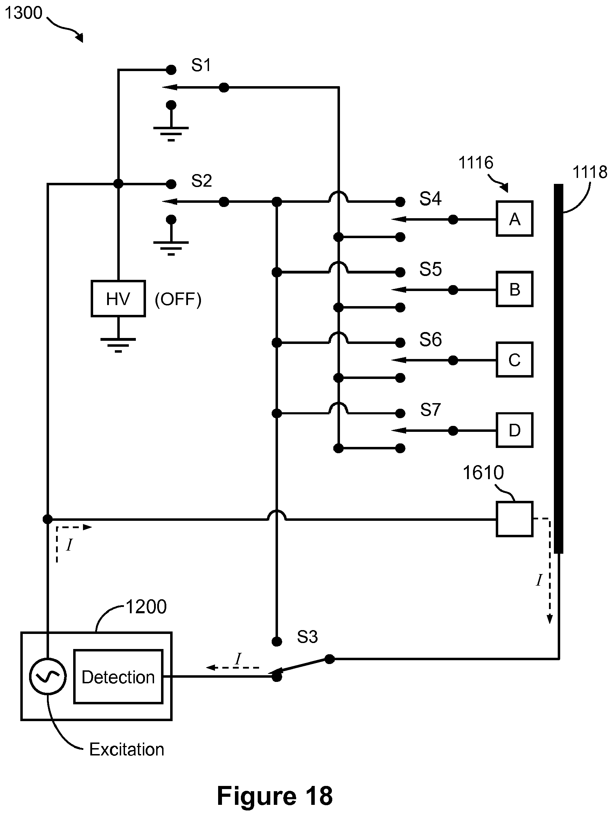

In this example, the excitation portion of impedance sensing system 1200 drives impedance electrode 1610 and the return path is through droplet 1124 and reference electrode 1118 (not shown) to the detection portion of impedance sensing system 1200. An example of system 1300 that further includes at least one impedance electrode 1610 is described with reference to Figure 18. Additionally, the invention is not limited to only one impedance electrode 1610 embedded in a certain droplet operations electrode 1116. Figure 17 shows an example of embedding multiple impedance electrodes 1610 in a droplet operations electrode 1116.

**Figure 17** illustrates another top view of a portion of the droplet operations electrodes 1116 of droplet actuator 1100 of Figure 11, which includes multiple embedded impedance electrodes that are electrically connected to impedance sensing system 1200. Figure 17 shows another example of a way to monitor impedance using electrodes that are separate from the droplet operations electrodes. In this example, four impedance electrodes 1610 are embedded in the footprint of at least one droplet operations electrode 1116. For example, impedance electrodes 1610A, 1610B, 1610C, and 1610D are small-footprint electrodes that are embedded, respectively, at each of the four edges of the large-footprint droplet operations electrode 1116.

In this example, the excitation portion of impedance sensing system 1200 drives all four impedance electrodes 1610A, 1610B, 1610C, and 1610D and the return path is through droplet 1124 and reference electrode 1118 (not shown) to the detection portion of impedance sensing system 1200.

**Figure 18** illustrates a schematic diagram of system 1300 of Figure 13 that further includes at least one embedded impedance electrode 1610 and that is configured for conducting impedance sensing operations. In this example, the one impedance electrode 1610 of Figure 16 may be used in the droplet actuator independently of other impedance sensing operations and/or droplet operations. This is because the impedance electrode 1610 is a dedicated impedance sensing electrode. That is, impedance electrode 1610 is not used to perform the dual function of droplet operations and impedance sensing. Instead, impedance electrode 1610 is used to perform impedance sensing operations only. Figure 18 shows that impedance electrode 1610 may be connected directly to the excitation portion of impedance sensing system 1200. The return path is through a droplet (not shown) and reference electrode 1118 to the detection portion of impedance sensing system 1200 via switch S3. With respect to impedance electrode 1610, the states of switches S1, S2, S4, S5, S6, and S7 are "don't care." In another example, the four impedance electrodes 1610A, 1610B, 1610C, and 1610D of Figure 17 may be included in system 1300, in place of the one impedance electrode 1610.

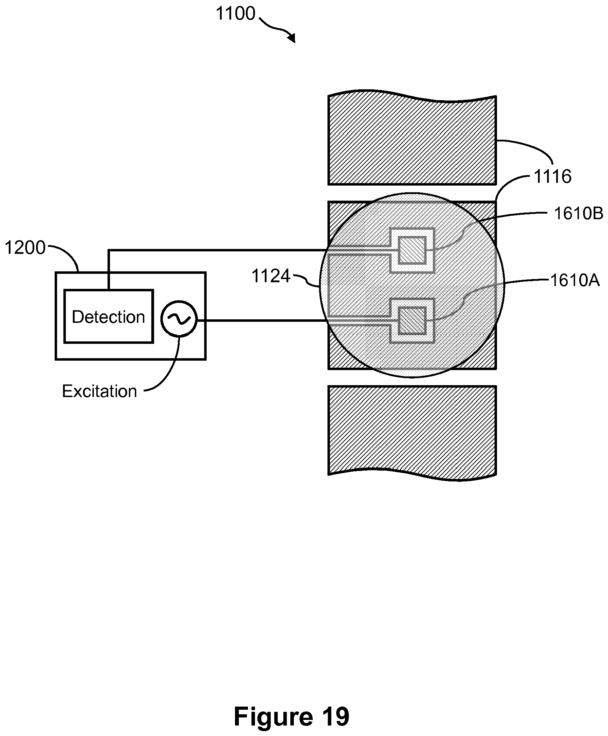

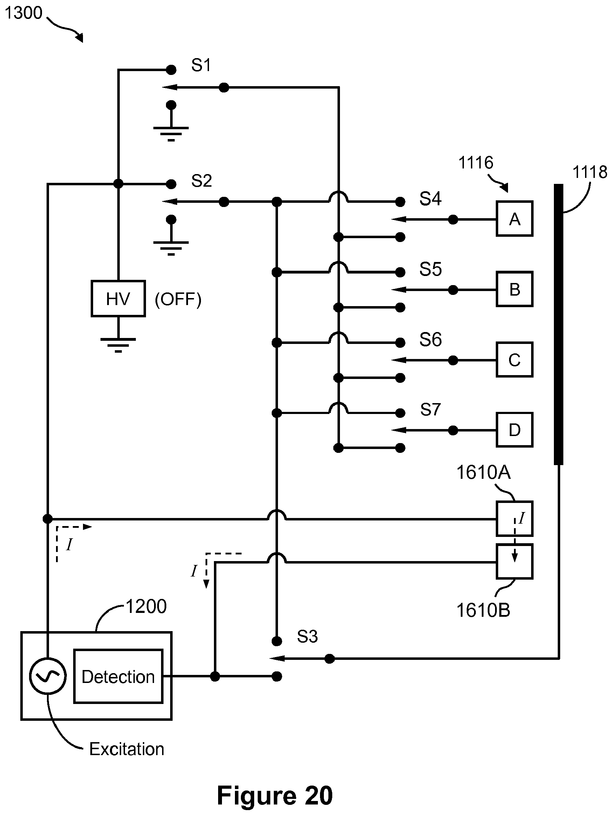

**Figure 19** illustrates yet another top view of droplet operations electrodes 1116 of droplet actuator 1100 of Figure 11, which includes at least one set of coplanar embedded impedance electrodes that are electrically connected to an impedance sensing system. Figure 19 shows yet another example of a way to monitor impedance using electrodes that are separate from the droplet operations electrodes. In this example, two impedance electrodes 1610 are embedded in the footprint of at least one droplet operations electrode 1116. For example, an impedance electrode 1610A and 1610B are small-footprint electrodes that are embedded side by side at about the central portion of the large-footprint droplet operations electrode 1116. In this example, impedance electrode 1610A and 1610B provide a supply electrode and a return electrode on the same plane of the droplet actuator. As a result, the return path need not be through droplet 1124 and reference electrode 1118 (not shown). In this example, the excitation portion of impedance sensing system 1200 drives impedance electrode 1610A and the return path is through droplet 1124 and impedance electrode 1610B to the detection portion of impedance sensing system 1200. An example of system 1300 that further includes the coplanar impedance electrode 1610A and 1610B is described with reference to Figure 20.

**Figure 20** illustrates a schematic diagram of system 1300 of Figure 13 that further includes at least one set of coplanar embedded impedance electrodes 1610 and that that is configured for conducting impedance sensing operations. In this example, impedance electrodes 1610A and 1610B of Figure 19 may be used in the droplet actuator independently of other impedance sensing operations and/or droplet operations. This is because impedance electrodes 1610A and 1610B are dedicated impedance sensing electrodes. That is, impedance electrodes 1610A and 1610B are not used to perform the dual function of droplet operations and impedance sensing. Instead, impedance electrodes 1610A and 1610B are used to perform impedance sensing operations only. Figure 18 shows that impedance electrode 1610A may be connected directly to the excitation portion of impedance sensing system 1200. The return path is a direct connection through a droplet (not shown) and impedance electrode 1610B to the detection portion of impedance sensing system 1200. With respect to impedance electrodes 1610A and 1610B, the states of switches S1 through S7 are "don't care."

### 6.6 Systems

It will be appreciated that various aspects of the invention may be embodied as a method, system, computer readable medium, and/or computer program product. Aspects of the invention may take the form of hardware embodiments, software embodiments (including firmware, resident software, micro-code, etc.), or embodiments combining software and hardware aspects that may all generally be referred to herein as a "circuit," "module" or "system." Furthermore, the methods of the invention may take the form of a computer program product on a computer-usable storage medium having computer-usable program code embodied in the medium.

Any suitable computer useable medium may be utilized for software aspects of the invention. The computer-usable or computer-readable medium may be, for example but not limited to, an electronic, magnetic, optical, electromagnetic, infrared, or semiconductor system, apparatus, device, or propagation medium. The computer readable medium may include transitory and/or non-transitory embodiments. More specific examples (a non-exhaustive list) of the computer-readable medium would include some or all of the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission medium such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device.

Program code for carrying out operations of the invention may be written in an object oriented programming language such as Java, Smalltalk, C++ or the like. However, the program code for carrying out operations of the invention may also be written in conventional procedural programming languages, such as the "C" programming language or similar programming languages. The program code may be executed by a processor, application specific integrated circuit (ASIC), or other component that executes the program code. The program code may be simply referred to as a software application that is stored in memory (such as the computer readable medium discussed above). The program code may cause the processor (or any processor-controlled device) to produce a graphical user interface ("GUI"). The graphical user interface may be visually produced on a display device, yet the graphical user interface may also have audible features. The program code, however, may operate in any processor-controlled device, such as a computer, server, personal digital assistant, phone, television, or any processor-controlled device utilizing the processor and/or a digital signal processor.

The program code may locally and/or remotely execute. The program code, for example, may be entirely or partially stored in local memory of the processor-controlled device. The program code, however, may also be at least partially remotely stored, accessed, and downloaded to the processor-controlled device. A user's computer, for example, may entirely execute the program code or only partly execute the program code. The program code may be a stand-alone software package that is at least partly on the user's computer and/or partly executed on a remote computer or entirely on a remote computer or server. In the latter scenario, the remote computer may be connected to the user's computer through a communications network.

The invention may be applied regardless of networking environment. The communications network may be a cable network operating in the radio-frequency domain and/or the Internet Protocol (IP) domain. The communications network, however, may also include a distributed computing network, such as the Internet (sometimes alternatively known as the "World Wide Web"), an intranet, a local-area network (LAN), and/or a wide-area network (WAN). The communications network may include coaxial cables, copper wires, fiber optic lines, and/or hybrid-coaxial lines. The communications network may even include wireless portions utilizing any portion of the electromagnetic spectrum and any signaling standard (such as the IEEE 802 family of standards, GSM/CDMA/TDMA or any cellular standard, and/or the ISM band). The communications network may even include powerline portions, in which signals are communicated via electrical wiring. The invention may be applied to any wireless/wireline communications network, regardless of physical componentry, physical configuration, or communications standard(s).

Certain aspects of invention are described with reference to various methods and method steps. It will be understood that each method step can be implemented by the program code and/or by machine instructions. The program code and/or the machine instructions may create means for implementing the functions/acts specified in the methods.

The program code may also be stored in a computer-readable memory that can direct the processor, computer, or other programmable data processing apparatus to function in a particular manner, such that the program code stored in the computer-readable memory produce or transform an article of manufacture including instruction means which implement various aspects of the method steps.

The program code may also be loaded onto a computer or other programmable data processing apparatus to cause a series of operational steps to be performed to produce a processor/computer implemented process such that the program code provides steps for implementing various functions/acts specified in the methods of the invention.

### 7 Concluding Remarks

The foregoing detailed description of embodiments refers to the accompanying drawings, which illustrate specific embodiments of the invention. Other embodiments having different structures and operations do not depart from the scope of the present invention. The term "the invention" or the like is used with reference to certain specific examples of the many alternative aspects or embodiments of the applicants' invention set forth in this specification, and neither its use nor its absence is intended to limit the scope of the applicants' invention or the scope of the claims. This specification is divided into sections for the convenience of the reader only. Headings should not be construed as limiting of the scope of the invention. The definitions are intended as a part of the description of the invention. It will be understood that various details of the present invention may be changed without departing from the scope of the present invention. Furthermore, the foregoing description is for the purpose of illustration only, and not for the purpose of limitation. The present application is a divisional application based on an earlier European Application No 11841725.2, which was in turn derived from PCT Application No PCT/US2011/060714. The following numbered clauses 1 to 25, which correspond to the claims of that earlier PCT Application as filed, form part of the present disclosure and in particular form further aspects of the invention, whether or not they appear in the present claims.

### Clauses 1 to 25:

1. A method of measuring capacitance at a position within a droplet actuator, the method comprising applying a base oscillation frequency at the position and detecting a deviation from the base oscillation frequency.
2. The method of clause 1, further comprising using a computer to correlate the deviation from the base oscillation frequency with the absence, presence, partial presence or size of a droplet at the position.
3. A method of detecting a droplet at a position within a droplet actuator, the method comprising detecting charge and/or discharge from a droplet at the position.
4. The method of clause 3, further comprising measuring charge time at the position.
5. The method of clause 3, further comprising measuring discharge time at the position.
6. The method of clause 3, further comprising measuring charge time and discharge time at the position.
7. The method of any of clauses 1 and following, wherein the detecting is accomplished at an electrode situated across a droplet operations gap from the position.
8. The method of any of clauses 1 and following, wherein the detecting is accomplished by a circuit that comprises a protection circuit.
9. The method of any of clauses 1 and following, wherein the detecting is accomplished simultaneously at multiple locations.
10. The method of any of clauses 1 and following, wherein the detecting is accomplished sequentially at multiple locations.
11. The method of any of clauses 1 and following, wherein the detecting is accomplished across a region extending from a droplet operations electrode on a first substrate to a ground electrode on a second substrate.
12. The method of any of clauses 1 and following, wherein the detecting is accomplished using a pulse counter.
13. The method of any of clauses 1 and following, further comprising attempting to transport a droplet to the position prior to or contemporaneously with the measuring.
14. The method of any of clauses 1 and following, further comprising attempting to transport a droplet away from the position following or contemporaneously with the measuring.
15. The method of any of clauses 1 and following, wherein the position comprises a necking position during droplet dispensing or splitting by electrowetting.
16. The method of any of clauses 1 and following, wherein the position comprises a position of an expected dispensed droplet following a droplet dispensing operation.
17. The method of any of clauses 1 and following, further comprising attempting to fill the droplet actuator with filler fluid prior to the detecting, wherein the position comprises a position selected to assess by the detecting whether the droplet actuator is filled with filler fluid.
18. The method of clause 24 further comprising using a computer to determine based on results of the detecting whether an air is present at the location.
19. A method of determining a thickness of an oil film in a droplet actuator, the method comprising: (a) measuring capacitance across a droplet actuator gap filled with an oil filler fluid, wherein the measuring is conducted at a known droplet position; and (b) correlating the measurement with oil thickness.
20. The method further comprising correlating the results of the measuring with interfacial tension between the droplet and the oil.
21. The method further comprising correlating is conducted using a computer.
22. A method of determining temperature in a droplet actuator, the method comprising: (a) measuring capacitance across a droplet actuator gap comprising a known filler fluid and a droplet of known content; and (b) correlating the measurement with temperature.
23. The method further comprising correlating is conducted using a computer.
24. The method of any of clauses 1 and following, further comprising making a real-time adjustment in a droplet operation based on a result of the detecting.
25. The method of clause 24 wherein the adjustment comprises making a change in a characteristic or magnitude of voltage at an electrowetting electrode that is controlling an aspect of the droplet operation.

## Claims

1. A method for analyzing at least one condition present in a droplet actuator (1100), the droplet actuator (1100) comprising a bottom substrate (1110) separated from a top substrate (1112) by a gap (1114), the bottom substrate (1110) including an arrangement of droplet operations electrodes (1116), wherein droplet operations are conducted on droplets (1124) located atop droplet operations electrodes (1116) on a droplet operations surface and wherein the gap (1114) is filed with an oil filler fluid (1122) and an impedance sensing system (1200) is electrically connected to the droplet actuator (1100), a circuit formed by the impedance sensing system (1200) and the droplet actuator (1100) including a capacitance C-droplet, capacitance C-droplet being the capacitance developed across an oil film (1126) between a droplet (1124) and the droplet operations electrode (1116);
the method comprising correlating impedance measurements obtained using the impedance sensing system (1200) with at least one condition present in the droplet actuator (1100).

2. The method of claim 1, wherein the impedance sensing system (1200) comprises an impedance spectrometer.

3. The method of claim 1 or claim 2, wherein the impedance sensing system (1200) is used to determine a liquid temperature, e.g., droplet temperature, or the interfacial tension of the oil layer and/or droplets, or heat produced as a byproduct of chemical reactions.

4. The method of any preceding claim, wherein the impedance measurements obtained using the impedance sensing system (1200) are correlated with changes in the droplet and/or oil filler fluid that affect surface tension, such as changes in the droplet and/or oil filler fluid due to temperature.

5. The method of claim 1, wherein the impedance sensing system (1200) is used to monitor capacitive loading of the droplet operations electrode (1116) to infer droplet overlap and by inference, the volume supported by each electrode (1116).

6. The method of claim 1, wherein the impedance is monitored using one or more electrodes (1610) separate from the droplet operations electrodes (1116).

7. The method of claim 1 wherein changes in the impedance measurements obtained using the impedance sensing system (1200) are correlated with changes in the thickness of the oil film (1126) caused by variations in interfacial tension between the droplet (1124) and oil filler fluid (1122).

8. The method of claim 7, wherein changes in the impedance measurements obtained using the impedance sensing system (1200) are correlated with temperature or with the chemistry of the oil and/or the droplet.

9. The method of claim 1, wherein a standard temperature assessment droplet composition having a known interfacial tension is transported through a temperature zone to detect temperature.

10. The method of claim 1 wherein the impedance measurements obtained using the impedance sensing system (1200) are used for at least one of:
measuring interfacial tensions of liquids that have unknown composition;
closed-loop addition of surfactant materials to modify the interfacial tension of unknown samples in real time;
detection of the outcome of reactions that produce products that alter the interfacial tension between the droplet and the filler fluid as a byproduct, and
active manipulation of electrowetting control parameters such as voltages and transport rates.

11. The method of claim 1, wherein the impedance measurements obtained using the impedance sensing system (1200) are combined with observable characteristics, such as optical observation, of the droplet (1124).

12. The method of claim 1, wherein the thickness of the oil film in (1126) is determined by:
(a) measuring capacitance across the droplet actuator gap (1114) filled with the oil filler fluid (1122), wherein the measuring is conducted at a known droplet position; and
(b) correlating the measurement with oil thickness.

13. The method of claim 1, wherein temperature in a droplet actuator is determined by:
(a) measuring capacitance across the droplet actuator gap comprising a known filler fluid and a droplet of known content; and
(b) correlating the measurement with temperature.

14. The method of any preceding claim, further comprising making a real-time adjustment in a droplet operation based on a result of the correlating.

15. The method of claim 14 wherein the adjustment comprises making a change in a characteristic or magnitude of voltage at an electrowetting electrode that is controlling an aspect of the droplet operation.
